# EUROPEAN PATENT APPLICATION

(11) **EP 4 485 998 A1**
(43) Date of publication of application: **01.01.2025**
(21) Application number: 23777665.3
(22) Date of filing: 14.02.2023
(51) Int. Cl.: H04W 28/08

(54) **COMMUNICATION METHOD AND APPARATUS**

(30) Priority: 28.03.2022 CN 202210313762
(71) Applicant: Huawei Technologies Co., Ltd., Shenzhen, Guangdong 518129 (CN)
(72) Inventor: ZHU, Fangyuan, Shenzhen, Guangdong 518129 (CN); LI, Yan, Shenzhen, Guangdong 518129 (CN)
(74) Representative: Pfenning, Meinig & Partner mbB
(86) International application number: PCT/CN2023/075914
(87) International publication number: WO 2023/185286

(57) **Abstract**

This application provides a communication method and apparatus, and relates to the field of communication technologies, to resolve the following problem: resource shortage or communication congestion easily occurs on a network slice instance because the network slice instance is selected based on a fixed correspondence between a network slice and a network slice instance. The method includes: learning, by an access and mobility management function network element, that load information of a first network slice instance reaches or exceeds a threshold, where the first network slice instance serves a first session; sending indication information to a session management function network element corresponding to the first session, where the indication information is used to trigger establishment of a second session; and determining a second network slice instance for the second session, where the first network slice instance and the second network slice instance correspond to a same network slice.

## Description

This application claims priority to Chinese Patent Application No. 202210313762.1, filed with the China National Intellectual Property Administration on March 28, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A concept of a network slice (Network Slice) is proposed in a fifth generation (fifth generation, 5G) mobile communication network (5G network for short), to meet differentiated requirements of various types of services. The network slice refers to dividing a physical network into a plurality of virtual networks including specific network functions, network topologies, and network resources, to meet requirements of users of different network slices on service functions and quality of service. By using the network slice, an operator can construct a plurality of dedicated, virtualized, and isolated logical subnets on a universal physical platform, to meet different requirements of different user services for network capabilities.

In actual application, different types of services may be deployed on different network slices, and different instances of a same service type may also be deployed on different network slices. Generally, a network slice type may be identified by using single network slice selection assistance information (Single Network Slice Selection Assistance Information, S-NSSAI), and an operator may deploy a plurality of network slice instances for a same piece of S-NSSAI. For example, an operator may deploy different network slice instances for users of different levels. Therefore, when a user equipment accesses a network, a network device not only needs to select a network slice type for the user equipment, but also needs to select a network slice instance.

Currently, in a scenario in which a plurality of network slice instances are deployed, after the network determines a network slice S-NSSAI for the user equipment based on a service type requested by the user equipment, and determines a network slice instance corresponding to the network slice S-NSSAI, the network stores a correspondence between an identifier of the S-NSSAI and an identifier of the network slice instance in a context. Therefore, resources of the same network slice instance can be used to provide a service for the network slice subsequently.

However, when a quantity of user equipments currently accessing the network slice instance is relatively large, or the resources of the network slice instance are insufficient or even congestion occurs, if the network still selects a network slice instance based on a fixed correspondence between an identifier of a network slice corresponding to a user equipment and a network slice instance, resource shortage or communication congestion may further easily occur on the network slice instance. In addition, a protocol data unit (Protocol Data Unit, PDU) session requested by a user may fail to be established, or the network slice instance cannot provide a service for the PDU session.

### SUMMARY

This application provides a communication method and apparatus, to resolve the following problem in a conventional technology: Resource shortage or congestion easily occurs on a network slice instance because the network slice instance is selected based on a fixed correspondence between an identifier of a network slice and a network slice instance.

To achieve the foregoing objective, this application uses the following technical solutions.

According to a first aspect, a communication method is provided, applied to an access and mobility management function network element. The method includes: learning that load information of a first network slice instance reaches or exceeds a threshold, where the first network slice instance serves a first session; sending indication information to a session management function network element corresponding to the first session, where the indication information is used to trigger establishment of a second session; and determining a second network slice instance for the second session, where the first network slice instance and the second network slice instance correspond to a same network slice.

Based on the foregoing method, an access and mobility management function network element obtains a load status of a network slice instance. When determining that a load of a network slice instance allocated to a first session reaches a threshold, the access and mobility management function network element may trigger a session management function network element corresponding to the first session to re-establish a session, to migrate a current session of a user equipment to a new network slice instance. This avoids resource shortage or communication congestion on a current network slice instance.

In a possible implementation, the indication information indicates that the load information of the first network slice instance reaches or exceeds the threshold.

In a possible implementation, the method further includes: deleting a correspondence between an identifier of the network slice and an identifier of the first network slice instance. Based on the foregoing method, an access and mobility management function network element may delete a previously stored correspondence between an identifier of a network slice and an identifier of a first network slice instance by using that an obtained load status of a network slice instance reaches or exceeds the threshold, to re-match a network slice instance. This avoids a problem of resource shortage or communication congestion caused by selecting a network slice instance based on the fixed correspondence.

In a possible implementation, the determining a second network slice instance for the second session specifically includes: receiving a second session establishment request message from a user equipment, where the second session establishment request message includes the identifier of the network slice; sending a request message to a network slice selection function network element, where the request message includes the identifier of the network slice; and receiving a response message from the network slice selection function network element, where the response message includes an identifier of the second network slice instance.

Based on the foregoing method, after triggering establishment of a second session, an access and mobility management function network element may request, from a network slice selection function network element, allocation of a corresponding network slice instance to the second session, to migrate a service of a network slice to a new network slice instance. This alleviates the problem of resource shortage or communication congestion on a network slice instance.

In a possible implementation, the method further includes: determining, based on the identifier of the second network slice instance, a session management function network element corresponding to the second network slice instance; and interacting with the session management function network element corresponding to the second network slice instance, to complete the establishment of the second session based on the second network slice instance.

In a possible implementation, the learning that load information of a first network slice instance reaches or exceeds a threshold includes: sending a first subscription message to a communication apparatus, where the communication apparatus stores the load information of the first network slice instance in the network slice, and the first subscription message includes the identifier of the first network slice instance; receiving a first notification message from the communication apparatus; and determining, based on the first notification message, that the load information of the first network slice instance reaches or exceeds the threshold.

Based on the foregoing method, an access and mobility management function network element may request, from a communication apparatus, subscription to a load status of a first network slice instance, to learn in a timely manner whether load information of the first network slice instance reaches or exceeds a threshold, thereby improving rationality of network slice instance allocation and resource utilization.

In a possible implementation, the first subscription message is used to request to subscribe to the load information of the first network slice instance, and the first notification message indicates the load information of the first network slice instance; or the first subscription message is used to request to send a notification to the access and mobility management function network element when the load information of the first network slice instance reaches or exceeds the threshold, and the first notification message is used to notify that the load information of the first network slice instance reaches or exceeds the threshold.

Based on the foregoing method, an access and mobility management function network element may request, from a communication apparatus, subscription to whether load information of a first network slice instance reaches or exceeds a threshold, and may further request to subscribe to a notification triggered when the load information of the first network slice instance reaches or exceeds the threshold. Therefore, flexibility and accuracy of subscribing to or learning of a load status of a network slice instance by the access and mobility management function network element can be improved, thereby improving rationality of network slice instance allocation and resource utilization.

In a possible implementation, the first subscription message further includes the threshold corresponding to the first network slice instance.

In a possible implementation, the communication apparatus is a network slice selection function network element or a network slice admission control function network element.

According to a second aspect, a communication method is provided, applied to a session management function network element. The method includes: establishing a first session, where the first session is served by a first network slice instance; receiving indication information from an access and mobility management function network element, where the indication information indicates that load information of the first network slice instance reaches or exceeds a threshold, or the indication information is used to trigger establishment of a second session; and triggering the establishment of the second session based on the indication information, where the second session is served by a second network slice instance, and the first network slice instance and the second network slice instance correspond to a same network slice.

Based on the foregoing method, an access and mobility management function network element monitors a load status of a network slice instance. When receiving indication information from the access and mobility management function network element, a session management function network element corresponding to a first session may determine, based on the indication information, that resources of a current network slice instance are saturated and session re-establishment needs to be triggered, so that a current session of a user equipment is migrated to a new network slice instance. This avoids resource shortage or communication congestion on the current network slice instance.

According to a third aspect, a communication method is provided, applied to a session management function network element. The method includes: establishing a first session, where the first session is served by a first network slice instance; when learning that load information of the first network slice instance reaches or exceeds a threshold, sending indication information to an access and mobility management function network element, where the indication information indicates that the load information of the first network slice instance reaches or exceeds the threshold, or indicates the access and mobility management function network element to delete a correspondence between an identifier of a network slice and an identifier of the first network slice instance; and initiating a session re-establishment procedure to a user equipment to establish a second session, where the second session is served by a second network slice instance, and the first network slice instance and the second network slice instance correspond to the same network slice.

Based on the foregoing method, a session management function network element obtains a load status of a network slice instance. When determining that a load of an allocated network slice instance reaches a threshold, the session management function network element may trigger an access and mobility management function network element to re-establish a session, to migrate a current session of a user equipment to a new network slice instance. This avoids resource shortage or communication congestion on a network slice instance.

In a possible implementation, the learning that load information of the first network slice instance reaches or exceeds a threshold includes: sending a first subscription message to a communication apparatus, where the communication apparatus stores the load information of the first network slice instance in the network slice, and the first subscription message includes the identifier of the first network slice instance; receiving a first notification message from the communication apparatus; and determining, based on the first notification message, that the load information of the first network slice instance reaches or exceeds the threshold.

Based on the foregoing method, a session management function network element may request, from a communication apparatus, subscription to a load status of a first network slice instance, to learn in a timely manner whether load information of the first network slice instance reaches or exceeds a threshold, thereby improving rationality of network slice instance allocation and resource utilization.

In a possible implementation, the first subscription message is used to request to subscribe to the load information of the first network slice instance, and the first notification message indicates the load information of the first network slice instance; or the first subscription message is used to request to send a notification to the access and mobility management function network element when the load information of the first network slice instance reaches or exceeds the threshold, and the first notification message is used to notify that the load information of the first network slice instance reaches or exceeds the threshold.

Based on the foregoing method, a session management function network element may request, from a communication apparatus, subscription to whether load information of a first network slice instance reaches or exceeds a threshold, and may further request to subscribe to a notification triggered when the load information of the first network slice instance reaches or exceeds the threshold. Therefore, flexibility and accuracy of subscribing to or learning of a load status of a network slice instance by the session management function network element can be improved, thereby improving rationality of network slice instance allocation and resource utilization.

In a possible implementation, the first subscription message further includes the threshold corresponding to the first network slice instance.

In a possible implementation, the communication apparatus is a network slice selection function network element or a network slice admission control function network element.

According to a fourth aspect, a communication method is provided, applied to an access and mobility management function network element. The method includes: receiving indication information from a session management function network element, where a first network slice instance serves a first session that has been established; deleting, based on the indication information, a correspondence between an identifier of a network slice and an identifier of the first network slice instance; receiving a second session establishment request message, where the second session establishment request message includes the identifier of the network slice; and determining a second network slice instance for a second session, where the second session is served by the second network slice instance, and the first network slice instance and the second network slice instance correspond to the same network slice.

Based on the foregoing method, a session management function network element monitors a load status of a network slice instance. When receiving indication information from the session management function network element, an access and mobility management function network element may determine, based on the indication information, to delete a previously stored fixed correspondence between a network slice and a network slice instance, and trigger session re-establishment, to migrate a current session of a user equipment to a new network slice instance. This avoids resource shortage or communication congestion on a network slice instance.

In a possible implementation, the indication information indicates that load information of the first network slice instance reaches or exceeds a threshold, or indicates the access and mobility management function network element to delete the correspondence between the identifier of the network slice and the identifier of the first network slice instance.

In a possible implementation, the determining a second network slice instance for a second session specifically includes: receiving a second session establishment request message from a user equipment, where the second session establishment request message includes the identifier of the network slice; sending a request message to a network slice selection function network element, where the request message includes the identifier of the network slice; and receiving a response message from the network slice selection function network element, where the response message includes an identifier of the second network slice instance.

In a possible implementation, the method further includes: determining, based on the identifier of the second network slice instance, a session management function network element corresponding to the second network slice instance; and interacting with the session management function network element corresponding to the second network slice instance, to complete establishment of the second session based on the second network slice instance.

According to a fifth aspect, a communication method is provided, applied to a communication apparatus. The method includes: receiving a first subscription message from a first subscription network element, where the first subscription message includes an identifier of a first network slice instance; and if it is determined that load information of the first network slice instance reaches or exceeds a threshold, sending a first notification message to the first subscription network element, where if the first subscription message is used to request to subscribe to the load information of the first network slice instance, the first notification message indicates the load information of the first network slice instance; or if the first subscription message is used to request to send a notification to the first subscription network element when the load information of the first network slice instance reaches or exceeds the threshold, the first notification message indicates that the load information of the first network slice instance reaches or exceeds the threshold.

Based on the foregoing method, a communication apparatus may receive a subscription request from a subscription network element, to subscribe to information indicating that load information of a first network slice instance reaches or exceeds a threshold, and may further request to subscribe to a notification triggered when the load information of the first network slice instance reaches or exceeds the threshold. Therefore, flexibility and accuracy of subscribing to or learning of a load status of a network slice instance by a session management function network element can be improved, thereby improving rationality of network slice instance allocation and resource utilization.

In a possible implementation, the first subscription message further includes the threshold corresponding to the first network slice instance.

In a possible implementation, the communication apparatus stores the load information of the first network slice instance, and the communication apparatus is a network slice selection function network element or a network slice admission control function network element.

In a possible implementation, the first subscription network element is an access and mobility management function network element or a session management function network element.

In a possible implementation, the method further includes: receiving a second subscription message from a second subscription network element, where the second subscription message is used to request to subscribe to load information of a second network slice instance, or is used to request to send a notification to the second subscription network element when the load information of the second network slice instance reaches or exceeds the threshold, where the second subscription message includes an identifier of the second network slice instance, and the first network slice instance and the second network slice instance correspond to a same network slice.

In a possible implementation, if the first subscription network element is an access and mobility management function network element and the communication apparatus is a network slice selection function network element, the method further includes: receiving a request message from the access and mobility management function network element, where the request message includes an identifier of the network slice; and sending a response message to the access and mobility management function network element, where the response message includes the identifier of the second network slice instance, and the first network slice instance and the second network slice instance correspond to the same network slice.

According to a sixth aspect, a communication method is provided, applied to an access and mobility management function network element. The method includes: learning that load information of a first network slice instance reaches or exceeds a threshold, where the first network slice instance serves a first session; deleting a correspondence between an identifier of a network slice associated with the first session and an identifier of the first network slice instance; and receiving an establishment request message corresponding to a second session, and determining a second network slice instance for the second session, where the first network slice instance and the second network slice instance correspond to the same network slice.

Based on the foregoing method, when learning that a load of a first network slice instance corresponding to a current first session reaches or exceeds a threshold, an access and mobility management function network element may delete an association relationship between a network slice and the first network slice instance. Therefore, when learning that load information of the first network slice instance reaches or exceeds the threshold, a session management function network element serving the first network slice instance may trigger establishment of a new second session. In this case, the access and mobility management function network element may select a new network slice instance, for example, a second network slice instance, for the second session. This effectively avoids a problem of resource shortage or communication congestion caused by selecting a network slice instance based on a fixed correspondence between a network slice and a network slice instance.

In a possible implementation, indication information is sent to a session management function network element corresponding to the first session, where the indication information is used to trigger the establishment of the second session.

In a possible implementation, the indication information indicates that the load information of the first network slice instance reaches or exceeds the threshold.

In a possible implementation, the learning that load information of a first network slice instance reaches or exceeds a threshold specifically includes: sending a first subscription message to a communication apparatus, where the communication apparatus stores the load information of the first network slice instance in the network slice, and the first subscription message includes the identifier of the first network slice instance; receiving a first notification message from the communication apparatus; and determining, based on the first notification message, that the load information of the first network slice instance reaches or exceeds the threshold.

In a possible implementation, the first subscription message is used to request to subscribe to the load information of the first network slice instance, and the first notification message indicates the load information of the first network slice instance; or the first subscription message is used to request to send a notification to the access and mobility management function network element when the load information of the first network slice instance reaches or exceeds the threshold, and the first notification message is used to notify that the load information of the first network slice instance reaches or exceeds the threshold.

In a possible implementation, the first subscription message further includes the threshold corresponding to the first network slice instance.

In a possible implementation, the communication apparatus is a network slice selection function network element or a network slice admission control function network element.

According to a seventh aspect, a communication method is provided, applied to a session management function network element. The method includes: establishing a first session, where the first session is served by a first network slice instance; and triggering establishment of a second session when load information of the first network slice instance reaches or exceeds a threshold, where the second session is served by a second network slice instance, and the first network slice instance and the second network slice instance correspond to a same network slice.

Based on the foregoing method, when learning that load information of a first network slice instance reaches or exceeds a threshold, a session management function network element serving the first network slice instance may trigger establishment of a new second session, and an access and mobility management function network element may select and allocate a new network slice instance, for example, a second network slice instance, to the second session. This effectively avoids a problem of resource shortage or communication congestion caused by selecting a network slice instance based on a fixed correspondence between a network slice and a network slice instance.

In a possible implementation, the method further includes: receiving indication information from the access and mobility management function network element, where the indication information is used to trigger the establishment of the second session.

In a possible implementation, the indication information indicates that the load information of the first network slice instance reaches or exceeds the threshold.

According to an eighth aspect, an access and mobility management function network element is provided, and includes a processing module and a transceiver module. The processing module is configured to learn that load information of a first network slice instance reaches or exceeds a threshold, and the first network slice instance serves a first session; the transceiver module is configured to send indication information to a session management function network element corresponding to the first session, where the indication information is used to trigger establishment of a second session; and the processing module is further configured to determine a second network slice instance for the second session; where the first network slice instance and the second network slice instance correspond to a same network slice.

In a possible implementation, the indication information indicates that the load information of the first network slice instance reaches or exceeds the threshold.

In a possible implementation, the processing module is further configured to delete a correspondence between an identifier of the network slice and an identifier of the first network slice instance.

In a possible implementation, the transceiver module is further configured to: receive a second session establishment request message from a user equipment, where the second session establishment request message includes the identifier of the network slice; send a request message to a network slice selection function network element, where the request message includes the identifier of the network slice; and receive a response message from the network slice selection function network element, where the response message includes an identifier of the second network slice instance.

In a possible implementation, the processing module is further configured to determine, based on the identifier of the second network slice instance, a session management function network element corresponding to the second network slice instance; and the transceiver module is further configured to interact with the session management function network element corresponding to the second network slice instance, to complete the establishment of the second session based on the second network slice instance.

In a possible implementation, the transceiver module is further configured to: send a first subscription message to a communication apparatus, where the communication apparatus stores the load information of the first network slice instance in the network slice, and the first subscription message includes the identifier of the first network slice instance; receive a first notification message from the communication apparatus; and determine, based on the first notification message, that the load information of the first network slice instance reaches or exceeds the threshold.

In a possible implementation, the first subscription message is used to request to subscribe to the load information of the first network slice instance, and the first notification message indicates the load information of the first network slice instance; or the first subscription message is used to request to send a notification to the access and mobility management function network element when the load information of the first network slice instance reaches or exceeds the threshold, and the first notification message is used to notify that the load information of the first network slice instance reaches or exceeds the threshold.

In a possible implementation, the first subscription message further includes the threshold corresponding to the first network slice instance.

In a possible implementation, the communication apparatus is a network slice selection function network element or a network slice admission control function network element.

According to a ninth aspect, a session management function network element is provided, and includes a processing module and a transceiver module. The processing module is configured to establish a first session, where the first session is served by a first network slice instance; the transceiver module is configured to receive indication information from an access and mobility management function network element, where the indication information indicates that load information of the first network slice instance reaches or exceeds a threshold, or the indication information is used to trigger establishment of a second session; and the processing module is further configured to trigger the establishment of the second session based on the indication information, where the second session is served by a second network slice instance, and the first network slice instance and the second network slice instance correspond to a same network slice.

According to a tenth aspect, a session management function network element is provided, and includes a processing module and a transceiver module. The processing module is configured to establish a first session, and the first session is served by a first network slice instance; the processing module is further configured to learn that load information of the first network slice instance reaches or exceeds a threshold, and the transceiver module is configured to send indication information to an access and mobility management function network element, where the indication information indicates that the load information of the first network slice instance reaches or exceeds the threshold, or indicates the access and mobility management function network element to delete a correspondence between an identifier of the network slice and an identifier of the first network slice instance; and the transceiver module is further configured to initiate a session re-establishment procedure to a user equipment to establish a second session, where the second session is served by a second network slice instance, and the first network slice instance and the second network slice instance correspond to the same network slice.

In a possible implementation, the transceiver module is further configured to: send a first subscription message to a communication apparatus, where the communication apparatus stores the load information of the first network slice instance in the network slice, and the first subscription message includes the identifier of the first network slice instance; receive a first notification message from the communication apparatus; and determine, based on the first notification message, that the load information of the first network slice instance reaches or exceeds the threshold.

In a possible implementation, the first subscription message is used to request to subscribe to the load information of the first network slice instance, and the first notification message indicates the load information of the first network slice instance; or the first subscription message is used to request to send a notification to the access and mobility management function network element when the load information of the first network slice instance reaches or exceeds the threshold, and the first notification message is used to notify that the load information of the first network slice instance reaches or exceeds the threshold.

In a possible implementation, the first subscription message further includes the threshold corresponding to the first network slice instance.

In a possible implementation, the communication apparatus is a network slice selection function network element or a network slice admission control function network element.

According to an eleventh aspect, an access and mobility management function network element is provided, and includes a processing module and a transceiver module. The transceiver module is configured to receive indication information from a session management function network element, where a first network slice instance serves a first session service that has been established; the processing module is configured to delete, based on the indication information, a correspondence between an identifier of a network slice and an identifier of the first network slice instance; the transceiver module is further configured to receive a second session establishment request message, where the second session establishment request message includes the identifier of the network slice; and the processing module is further configured to determine a second network slice instance for a second session, where the second session is served by the second network slice instance, and the first network slice instance and the second network slice instance correspond to the same network slice.

In a possible implementation, the indication information indicates that load information of the first network slice instance reaches or exceeds a threshold, or indicates the access and mobility management function network element to delete the correspondence between the identifier of the network slice and the identifier of the first network slice instance.

In a possible implementation, the transceiver module is further configured to: receive a second session establishment request message from a user equipment, where the second session establishment request message includes the identifier of the network slice; send a request message to a network slice selection function network element, where the request message includes the identifier of the network slice; and receive a response message from the network slice selection function network element, where the response message includes an identifier of the second network slice instance.

In a possible implementation, the processing module is further configured to determine, based on the identifier of the second network slice instance, a session management function network element corresponding to the second network slice instance; and the transceiver module is further configured to interact with the session management function network element corresponding to the second network slice instance, to complete establishment of the second session based on the second network slice instance.

According to a twelfth aspect, a communication apparatus is provided, and includes a processing module and a transceiver module. The transceiver module is configured to receive a first subscription message from a first subscription network element, where the first subscription message includes an identifier of a first network slice instance; and if the transceiver module determines that load information of the first network slice instance reaches or exceeds a threshold, the transceiver module is configured to send a first notification message to the first subscription network element. If the first subscription message is used to request to subscribe to the load information of the first network slice instance, the first notification message indicates the load information of the first network slice instance; or if the first subscription message is used to request to send a notification to the first subscription network element when the load information of the first network slice instance reaches or exceeds the threshold, the first notification message indicates that the load information of the first network slice instance reaches or exceeds the threshold.

In a possible implementation, the first subscription message further includes the threshold corresponding to the first network slice instance.

In a possible implementation, the communication apparatus stores the load information of the first network slice instance, and the communication apparatus is a network slice selection function network element or a network slice admission control function network element.

In a possible implementation, the first subscription network element is an access and mobility management function network element or a session management function network element.

In a possible implementation, the transceiver module is further configured to receive a second subscription message from a second subscription network element, where the second subscription message is used to request to subscribe to load information of a second network slice instance, or is used to request to send a notification to the second subscription network element when the load information of the second network slice instance reaches or exceeds the threshold, the second subscription message includes an identifier of the second network slice instance, and the first network slice instance and the second network slice instance correspond to a same network slice.

In a possible implementation, if the first subscription network element is an access and mobility management function network element and the communication apparatus is a network slice selection function network element, the transceiver module is further configured to: receive a request message from the access and mobility management function network element, where the request message includes an identifier of the network slice; and send a response message to the access and mobility management function network element, where the response message includes the identifier of a second network slice instance, and the first network slice instance and the second network slice instance correspond to the same network slice.

According to a thirteenth aspect, an access and mobility management function network element is provided, and includes a processing module and a transceiver module. The processing module is configured to learn that load information of a first network slice instance reaches or exceeds a threshold, where the first network slice instance serves a first session; the processing module is further configured to delete a correspondence between an identifier of a network slice associated with the first session and an identifier of the first network slice instance; and the transceiver module is configured to receive an establishment request message corresponding to a second session, and determine a second network slice instance for the second session; where the first network slice instance and the second network slice instance correspond to a same network slice.

In a possible implementation, the transceiver module is further configured to send indication information to a session management function network element corresponding to the first session, where the indication information is used to trigger establishment of the second session.

In a possible implementation, the indication information indicates that the load information of the first network slice instance reaches or exceeds the threshold.

In a possible implementation, the transceiver module is further configured to: send a first subscription message to a communication apparatus, where the communication apparatus stores the load information of the first network slice instance in the network slice, and the first subscription message includes the identifier of the first network slice instance; receive a first notification message from the communication apparatus; and determine, based on the first notification message, that the load information of the first network slice instance reaches or exceeds the threshold.

In a possible implementation, the first subscription message is used to request to subscribe to the load information of the first network slice instance, and the first notification message indicates the load information of the first network slice instance; or the first subscription message is used to request to send a notification to the access and mobility management function network element when the load information of the first network slice instance reaches or exceeds the threshold, and the first notification message is used to notify that the load information of the first network slice instance reaches or exceeds the threshold.

In a possible implementation, the first subscription message further includes the threshold corresponding to the first network slice instance.

In a possible implementation, the communication apparatus is a network slice selection function network element or a network slice admission control function network element.

According to a fourteenth aspect, a session management function network element is provided, and includes a processing module and a transceiver module. The processing module and the transceiver module are configured to establish a first session, and the first session is served by a first network slice instance. When determining that load information of the first network slice instance reaches or exceeds a threshold, the processing module and the transceiver module are further configured to trigger establishment of a second session, where the second session is served by a second network slice instance, and the first network slice instance and the second network slice instance correspond to a same network slice.

In a possible implementation, the transceiver module is further configured to receive indication information from an access and mobility management function network element, where the indication information is used to trigger the establishment of the second session.

In a possible implementation, the indication information indicates that the load information of the first network slice instance reaches or exceeds the threshold.

According to a fifteenth aspect, a communication apparatus is provided, where the communication apparatus includes a processor and a transmission interface, and the processor is configured to execute instructions stored in a memory, so that the apparatus executes the method according to any item of the first aspect.

According to a sixteenth aspect, a communication apparatus is provided, where the communication apparatus includes a processor and a transmission interface, and the processor is configured to execute instructions stored in a memory, so that the apparatus executes the method according to any item of the second aspect.

According to a seventeenth aspect, a communication apparatus is provided, where the communication apparatus includes a processor and a transmission interface, and the processor is configured to execute instructions stored in a memory, so that the apparatus executes the method according to any item of the third aspect.

According to an eighteenth aspect, a communication apparatus is provided, where the communication apparatus includes a processor and a transmission interface, and the processor is configured to execute instructions stored in a memory, so that the apparatus executes the method according to any item of the fourth aspect.

According to a nineteenth aspect, a communication apparatus is provided, where the communication apparatus includes a processor and a transmission interface, and the processor is configured to execute instructions stored in a memory, so that the apparatus executes the method according to any item of the fifth aspect.

According to a twentieth aspect, a communication apparatus is provided, where the communication apparatus includes a processor and a transmission interface, and the processor is configured to execute instructions stored in a memory, so that the apparatus executes the method according to any item of the sixth aspect.

According to a twenty-first aspect, a communication apparatus is provided, where the communication apparatus includes a processor and a transmission interface, and the processor is configured to execute instructions stored in a memory, so that the apparatus executes the method according to any item of the seventh aspect.

According to a twenty-second aspect, a computer-readable storage medium is provided, and includes a program or instructions. When the program or the instructions are run by a processor, the method according to any item of the first aspect is executed.

According to a twenty-third aspect, a computer-readable storage medium is provided, and includes a program or instructions. When the program or the instructions are run by a processor, the method according to any item of the second aspect is executed.

According to a twenty-fourth aspect, a computer-readable storage medium is provided, and includes a program or instructions. When the program or the instructions are run by a processor, the method according to any item of the third aspect is executed.

According to a twenty-fifth aspect, a computer-readable storage medium is provided, and includes a program or instructions. When the program or the instructions are run by a processor, the method according to any item of the fourth aspect is executed.

According to a twenty-sixth aspect, a computer-readable storage medium is provided, and includes a program or instructions. When the program or the instructions are run by a processor, the method according to any item of the fifth aspect is executed.

According to a twenty-seventh aspect, a computer-readable storage medium is provided, and includes a program or instructions. When the program or the instructions are run by a processor, the method according to any item of the sixth aspect is executed.

According to a twenty-eighth aspect, a computer-readable storage medium is provided, and includes a program or instructions. When the program or the instructions are run by a processor, the method according to any item of the seventh aspect is executed.

According to a twenty-ninth aspect, a computer program product is provided. When the computer program product runs on a computer or a processor, the computer or the processor is enabled to execute the method according to any item of the first aspect.

According to a thirtieth aspect, a computer program product is provided. When the computer program product is run on a computer or a processor, the computer or the processor is enabled to execute the method according to any item of the first aspect.

According to a thirty-first aspect, a computer program product is provided. When the computer program product runs on a computer or a processor, the computer or the processor is enabled to execute the method according to any item of the second aspect.

According to a thirty-second aspect, a computer program product is provided. When the computer program product runs on a computer or a processor, the computer or the processor is enabled to execute the method according to any item of the third aspect.

According to a thirty-third aspect, a computer program product is provided. When the computer program product runs on a computer or a processor, the computer or the processor is enabled to execute the method according to any item of the fourth aspect.

According to a thirty-fourth aspect, a computer program product is provided. When the computer program product runs on a computer or a processor, the computer or the processor is enabled to execute the method according to any item of the fifth aspect.

According to a thirty-fifth aspect, a computer program product is provided. When the computer program product runs on a computer or a processor, the computer or the processor is enabled to execute the method according to any item of the sixth aspect.

According to a thirty-sixth aspect, a computer program product is provided. When the computer program product runs on a computer or a processor, the computer or the processor is enabled to execute the method according to any item of the seventh aspect.

According to a thirty-seventh aspect, a communication system is provided, where the communication system includes the apparatus according to any item of the eighth aspect and the apparatus according to any item of the ninth aspect.

In a possible implementation, the communication system includes the apparatus according to any item of the twelfth aspect.

According to a thirty-eighth aspect, a communication system is provided, where the communication system includes the apparatus according to any item of the tenth aspect and the apparatus according to any item of the eleventh aspect.

In a possible implementation, the communication system includes the apparatus according to any item of the twelfth aspect.

According to a thirty-ninth aspect, a communication system is provided, where the communication system includes the apparatus according to any item of the thirteenth aspect and the apparatus according to any item of the fourteenth aspect.

In a possible implementation, the communication system includes the apparatus according to any item of the twelfth aspect.

It may be understood that any communication method, communication apparatus, communication system, computer-readable storage medium, computer program product, or the like provided above may be implemented by using a corresponding method provided above. Therefore, for beneficial effects that can be achieved by the communication method, the communication apparatus, the communication system, the computer-readable storage medium, the computer program product, or the like, refer to beneficial effects in the corresponding method provided above. Details are not described herein again.

### BRIEF DESCRIPTIONS OF DRAWINGS

FIG. 1 is a diagram of an architecture of a communication system according to an embodiment of this application;
FIG. 2 is a diagram of an architecture of another communication system according to an embodiment of this application;
FIG. 3 is a diagram of an architecture of another communication system according to an embodiment of this application;
FIG. 4 is a diagram of a structure of an apparatus according to an embodiment of this application; and
FIG. 5 to FIG. 11 are schematic flowcharts 1 to 7 of a communication method according to an embodiment of this application; and
FIG. 12 is a diagram of a structure of another communication apparatus according to an embodiment of this application.

### DESCRIPTIONS OF EMBODIMENTS

The terms "first" and "second" mentioned below are merely intended for a purpose of descriptions, and shall not be understood as an indication or implication of relative importance or implicit indication of the number of indicated technical features. Therefore, a feature limited by "first" or "second" may explicitly or implicitly include one or more features. In descriptions of embodiments, unless otherwise specified, "a plurality of" means two or more.

It should be noted that in this application, terms such as "example" or "for example" are used to represent giving an example, an illustration, or descriptions. Any embodiment or design scheme described as an "example" or "for example" in this application should not be explained as being more preferred or having more advantages than another embodiment or design scheme. To be precise, use of words such as "example" or "for example" is intended to present a relative concept in a specific manner.

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

First, related technologies involved in this application are briefly described.

PDU session: session for short, is an association between a terminal device and a data network (data network, DN), and is used to provide a PDU connection service. In embodiments of this application, each session in the following embodiments may be a PDU session. This is uniformly described herein. Details are not described below again.

Network slice: slicing for short, refers to dividing a physical network into a plurality of virtual networks including specific network functions, network topologies, and network resources, to meet requirements of users of different network slices on service functions and quality of service. By using the network slice, an operator can construct a plurality of dedicated, virtualized, and isolated logical subnets on a universal physical platform, to meet different requirements of different user services for network capabilities, and provide end to end (end to end, E2E) logical networks that meet specific service requirements.

An identifier of a network slice may be represented by using network slice selection assistance information (network slice selection assistance information, NSSAI). NSSAI includes one or more pieces of single NSSAI (single NSSAI, S-NSSAI), and is a set of S-NSSAI.

S-NSSAI includes a slice/service type (slice/service type, SST) and a slice differentiator (slice differentiator, SD). The SST includes a feature or service characteristic of a standardized or operator-defined network slice. The SD is optional information for supplementing the SST, and is used to distinguish between different network slices with a same SST.

Types and functions of NSSAI include the following:
Subscribed NSSAI (Subscribed NSSAI): a network slice corresponding to subscription data of a user.

Default NSSAI (Default NSSAI): One or more network slices in subscribed NSSAI of a user may be set as default NSSAI based on an operator policy. When default NSSAI is set, if a user equipment does not carry requested NSSAI in a registration request message (Registration Request), a network uses the default NSSAI to provide a service for the user equipment.

Requested NSSAI (Requested NSSAI): NSSAI identifier information of a network slice that is carried by a user equipment in a registration request message (Registration Request). Specifically, when the user equipment requests a service for the first time, the registration request message may carry configured NSSAI, that is, Configured NSSAI. When the user equipment requests the service again, the registration request message may carry allowed NSSAI as requested NSSAI.

Allowed NSSAI (Allowed NSSAI): one or more pieces of S-NSSAI allowed by a network device in NSSAI requested by a user equipment. Specifically, the network device may carry an allowed NSSAI network element in a registration accept message (Registration Accept), to notify the user equipment of information about the allowed NSSAI.

Network slice instance (Network Slice instance, NSI): a group of network function instances allocated to a network slice that has been deployed and resources required by the network slice, such as computing resources, storage resources, or network resources. NSI IDs may be used to identify different network slice instances.

The following briefly describes an implementation environment and an application scenario of embodiments of this application.

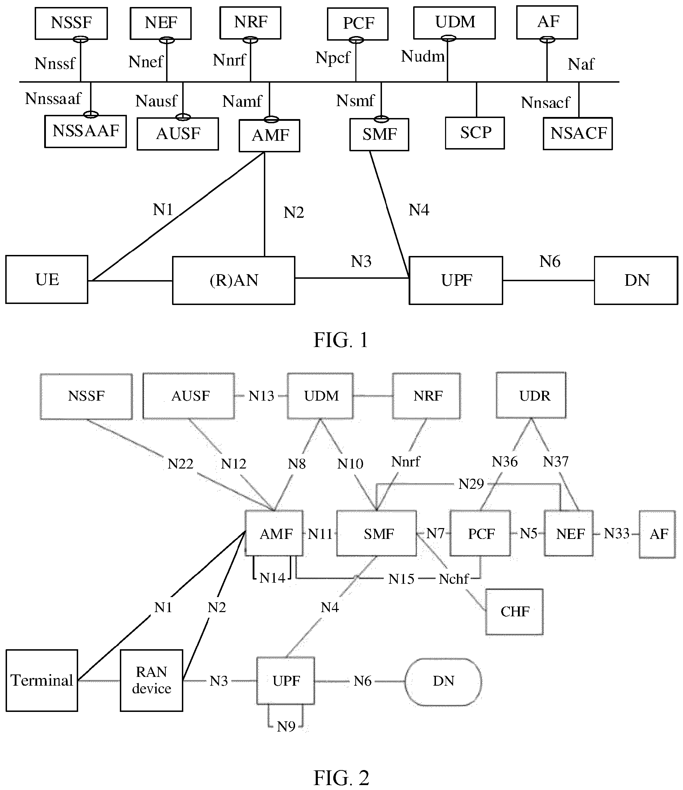

The communication methods provided in embodiments of this application may be applied to a service-based architecture shown in FIG. 1. By using a network service architecture of a fifth generation (5th generation, 5G) mobile communication system as an example, FIG. 1 shows an interaction relationship between network functions (network function, NF) and entities, and corresponding interfaces. Network functions and entities in a service-based network architecture (service-based architecture, SBA) of a 5G system defined by the 3rd generation partnership project (the 3rd generation partnership project, 3GPP) mainly include: a user equipment (User Equipment, UE), an access network (access network, AN) or a radio access network (radio access network, RAN), a user plane function (user plane function, UPF), a data network (data network, DN), an access and mobility management function (access and mobility management function, AMF), a session management function (session management function, SMF), an authentication server function (authentication server function, AUSF), a policy control function (policy control function, PCF), an application function (application function, AF), a network slice selection function (network slice selection function, NSSF), a unified data management (unified data management, UDM), a network slice selection function (network slice selection function, NSSF), a network slice admission control function (network slice admission control function, NSACF), a network slice-specific authentication and authorization function (network slice-specific authentication and authorization function, NSSAAF), a network exposure function (network exposure function, NEF), a service communication proxy (Service Communication Proxy, SCP), and a network repository function (NF repository function, NRF).

The UE, the (R)AN, the UPF, and the DN are usually referred to as user plane network functions and entities (or user plane network elements), and the other parts are usually referred to as control plane network functions and entities (or control plane network elements). 3GPP defines a processing function of a control plane network element in a network. The control plane network element has a function behavior defined by 3GPP and an interface defined by 3GPP. An NF can be used as a network element running on dedicated hardware, a software instance running on dedicated hardware, or a virtual function that is instantiated on a proper platform, for example, implemented on a cloud infrastructure device.

Main functions of the network elements are described in detail below.

(R)AN: The (R)AN may be an AN or a RAN. Specifically, the (R)AN may be a base station in various forms, for example, a macro base station, a micro base station, and a distributed unit-control unit (distribute unit-control unit, DU-CU). In addition, the base station may alternatively be a radio controller in a cloud radio access network (cloud radio access network, CRAN) scenario, a relay station, an access point, a vehicle-mounted device, a wearable device, a network device in a future evolved public land mobile network (public land mobile network, PLMN), or the like. The (R)AN is mainly responsible for radio resource management, quality of service management, data compression and encryption, and the like on an air interface side.

UPF: The UPF is mainly responsible for forwarding and receiving of user data. The UPF may receive downlink data from the DN, and then transmit the downlink data to the UE through the (R)AN. The UPF may further receive uplink data from the UE by using the (R)AN, and then forward the uplink data to the DN.

DN: For example, the DN may be an operator service network, an internet access network, or a third-party service network. The DN may exchange information with the UE by using a PDU session. The PDU session may be classified into a plurality of types, such as internet protocol version 4 (internet protocol version 4, IPv4) and IPv6.

AMF: The AMF is mainly responsible for processing of control plane messages and mobility management of users, including mobility status management, temporary user identity allocation, and user authentication and authorization, such as access control, mobility management, registration and deregistration, and network element selection.

SMF: The SMF is mainly configured to manage and establish sessions, allocate an IP address to the UE and manage the IP address, establish, modify, and release sessions, and control quality of service (quality of service, QoS).

AUSF: The AUSF is mainly responsible for network security, and is configured to generate a key, implement bidirectional authentication for the UE, and the like.

PCF: The PCF is mainly configured to manage policy rules and subscription information of users.

UDM: The UDM is mainly configured to process authentication and credit, manage subscription data, process user identities, perform access authorization, and manage registration and mobility, subscription, and short messages. For example, when subscription data of a user is modified, the UDM is responsible for notifying a corresponding network element.

NEF: The NEF is mainly configured to provide corresponding security assurance to ensure security of external applications on the communication network, open a QoS customization capability for external applications, subscribe to mobility status events, and distribute AF requests.

NRF: The NRF is mainly configured to provide internal or external addressing functions.

AF: The AF is mainly configured to send, to a network side, data routing information affected by an application, and interact with a policy framework by using a network exposure function network element to perform policy control, and the like.

NSSF: The NSSF is mainly configured to select a network slice.

NSACF: The NSACF is mainly configured to control a quantity of registered users on each network slice and/or control a quantity of sessions that are allowed to be established on each network slice. A maximum quantity of users (max number of UEs per network slice) and a maximum quantity of sessions (max number of PDU sessions per network slice) that are allowed by each network slice may be configured on the NSACF. When a quantity of users currently registered with a network slice is increased, the NSACF first determines whether the quantity of users currently accessing the network slice has reached a maximum quantity of users allowed by the network slice. When a quantity of sessions corresponding to a network slice is increased, the NSACF first determines whether the quantity of sessions that have been established for the network slice has reached a maximum quantity of sessions allowed by the network slice.

NSSAAF: The NSSAAF is mainly responsible for authentication and authorization of network slice selection.

For functions of other network elements included in FIG. 1, refer to related descriptions in a conventional technology. Details are not described herein again.

The UE and the (R)AN shown in FIG. 1 may communicate with each other by using an air interface technology. As shown in FIG. 1, N1 is a reference point between the UE and the AMF, N2 is a reference point between the (R)AN and the AMF, N3 is a reference point between the (R)AN and the UPF, N4 is a reference point between the SMF and the UPF, and N6 is a reference point between the UPF and the DN. As shown in FIG. 1, Namf is a service-based interface provided by the AMF, Nsmf is a service-based interface provided by the SMF, Nausf is a service-based interface provided by the AUSF, Nnssf is a service-based interface provided by the NSSF, Nnef is a service-based interface provided by the NEF, Nnrf is a service-based interface provided by the NRF, Npcf is a service-based interface provided by the PCF, Nudm is a service-based interface provided by the UDM, Naf is a service-based interface provided by the AF, Nnssaaf is a service-based interface provided by the NSSAAF, and Nnsacf is a service-based interface provided by the NSACF.

In addition, the communication methods provided in embodiments of this application may be applied to an architecture shown in FIG. 2. FIG. 2 is a diagram of an architecture of a 5G network based on reference points corresponding to FIG. 1. Interfaces between network elements are point-to-point interfaces instead of service-based interfaces.

As shown in FIG. 2, a terminal accesses the 5G network by using a RAN device, and the terminal communicates with an AMF by using an N1 interface (N1 for short); the RAN device communicates with the AMF by using an N2 interface (N2 for short); the RAN device communicates with a UPF by using an N3 interface (N3 for short); different UPFs communicate with each other by using an N9 interface (N9 for short); and the UPF accesses a data network (data network, DN) by using an N6 interface (N6 for short). In addition, an SMF communicates with the UPF by using an N4 interface (N4 for short); the AMF communicates with the SMF by using an N11 interface (N11 for short); the AMF communicates with a UDM by using an N8 interface (N8 for short); the AMF communicates with an AUSF by using an N12 interface (N12 for short); the AMF communicates with a PCF by using an N15 interface (N15 for short); the AMF communicates with an NSSF by using an N22 interface (N22 for short); different AMFs communicate with each other by using an N14 interface (N14 for short); the SMF communicates with the PCF by using an N7 interface (N7 for short); the SMF communicates with the UDM by using an N10 interface (N10 for short); the SMF communicates with an NEF by using an N29 interface (N29 for short); the SMF communicates with the NRF by using an Nnrf interface (Nnrf for short); the SMF communicates with a CHF by using an Nchf interface (Nchf for short); the PCF communicates with the NEF by using an N5 interface (N5 for short); a UDR communicates with the PCF by using an N36 interface (N36 for short); the UDR communicates with the NEF by using an N37 interface (N37 for short); and the UDM communicates with the AUSF by using an N13 interface (N13 for short).

It should be noted that FIG. 1 or FIG. 2 is merely an example of a network service architecture. The communication methods provided in embodiments of this application may be further applied to another network architecture, for example, a network architecture of a fourth generation (4th generation, 4G) mobile communication system. Alternatively, the communication methods in embodiments of this application may be further applied to another mobile communication system developed after the fifth generation. This is not limited in embodiments of this application.

Currently, based on a network slice mechanism, instances of different types of services may be deployed on different network slices, and different instances of a same service type may also be deployed on different network slices. Therefore, different network slices do not affect each other, to meet network requirements of different services.

Specifically, when a network slice is deployed in a core network, if a UE initially registers with the network, a network slice selection process is triggered. In the network slice selection process, the core network may complete the network slice selection process based on subscription data of the user equipment, local configuration information, a roaming protocol, an operator policy, and the like.

In addition, a 3GPP standard further defines a scenario of a plurality of network slice instances. To be specific, in a scenario in which a plurality of network slice instances are deployed, an operator may deploy a plurality of different network slice instances for a same network slice. In actual application, the operator may deploy different slice instances for different users. For example, the operator may respectively connect a plurality of user equipments to different network slice instances based on classification information of the users, or the operator may connect different user equipments to different network slice instances based on load statuses of the different network slice instances.

For example, an AMF supports network slices S-NSSAI-1 and S-NSSAI-2. Two different network slice instances are respectively deployed for the S-NSSAI-1 and the S-NSSAI-2 in the core network to provide services. As shown in Table 1, network slice instances corresponding to S-NSSAI-1 are an NSI-ID-1 and an NSI-ID-2, and network slice instances corresponding to the S-NSSAI-2 are an NSI-ID-3 and an NSI-ID-4.

**Table 1**

| Network slice supported by the AMF | Network slice instances |
|---|---|
| S-NSSAI-1 | NSI-ID-1 and NSI-ID-2 |
| S-NSSAI-2 | NSI-ID-3 and NSI-ID-4 |

Therefore, when the UE initially registers with the network, the core network not only needs to select a network slice for the UE, but also needs to select a network slice instance for the UE. Currently, there are two methods for selecting a network slice instance:
Manner 1: The core network determines a correspondence between a network slice and a network slice instance in a registration procedure of the UE.

In other words, in the registration procedure of the UE, the core network determines an NSI ID corresponding to each piece of S-NSSAI of allowed NSSAI of the UE, and the AMF stores a correspondence between the S-NSSAI and the NSI ID. Therefore, for different sessions subsequently initiated by the UE for a same piece of S-NSSAI, a same network slice instance may be determined based on the correspondence between the S-NSSAI and the NSI ID.

For example, in a scenario in which a plurality of network slice instances are deployed, if allowed S-NSSAI of the UE is the S-NSSAI-1, a network side determines, for the UE, that a network slice instance corresponding to the network slice S-NSSAI-1 is the NSI-ID-1, and the AMF stores a correspondence between the S-NSSAI-1 and the NSI-ID-1 in a context. When the UE initiates a first PDU session established for the S-NSSAI-1, the AMF may select, for the first PDU session based on the correspondence between the S-NSSAI-1 and the NSI-ID-1 that is stored in the context, an SMF network element corresponding to the NSI-ID-1, to complete session establishment. When the UE subsequently initiates a second PDU session for the S-NSSAI-1, the AMF may still select, for the second PDU session based on the correspondence between the S-NSSAI-1 and the NSI-ID-1 that is stored in the context, an SMF network element corresponding to the NSI-ID-1, to complete session establishment.

Manner 2: The core network determines a correspondence between a network slice and a network slice instance in a session establishment process of the UE.

In other words, in a registration procedure of the UE, the core network determines allowed NSSAI; and in the session establishment procedure of the UE, the core network completes selection of a network slice instance, and establishes a correspondence between S-NSSAI and an NSI ID.

For example, in a scenario in which a plurality of network slice instances are deployed, if allowed S-NSSAI of the UE is the S-NSSAI-1, when the UE initiates a first PDU session established for the S-NSSAI-1, the AMF requests an NSSF to determine a corresponding network slice instance for the S-NSSAI-1. For example, if the NSSF determines, based on the request of the AMF, that the corresponding network slice instance for the S-NSSAI-1 is the NSI-ID-1, the AMF stores a correspondence between the S-NSSAI-1 and the NSI-ID-1 in a context, and selects a corresponding SMF network element for the PDU session based on the NSI-ID-1. When the UE subsequently initiates a second PDU session for the S-NSSAI-1, the AMF may still select, for the second PDU session based on the correspondence between the S-NSSAI-1 and the NSI-ID-1 that is stored in the context, an SMF network element corresponding to the NSI-ID-1, to complete session establishment.

Therefore, in the foregoing two implementations, regardless of whether a network slice instance is determined in the session establishment process or in the registration process of the UE, once the core network determines a corresponding network slice instance for a network slice, the AMF stores a correspondence between S-NSSAI and an NSI ID, that is, binds the UE to a same network slice instance for a same network slice.

However, when a quantity of user equipments currently accessing the network slice instance is relatively large, or resources of the network slice instance are insufficient or even congestion occurs, if the network still selects a network slice instance based on a fixed correspondence between an identifier of a network slice corresponding to a user equipment and an identifier of a network slice instance, resource shortage or communication congestion may further easily occur on the network slice instance. In addition, a PDU session requested by a user may fail to be established, or the network slice instance cannot provide a service for the PDU session. For example, the AMF stores the correspondence between the S-NSSAI and the NSI-ID-1 in the context of the UE. In this case, network resources of the network slice instance NSI-ID-1 are insufficient. Even if another network slice instance with plenty of resources, for example, the NSI-ID-2, is deployed in the current network, the AMF still creates a session based on the NSI-ID-1 that is stored in the context of the UE.

Based on the foregoing problem, an embodiment of this application provides a communication manner, to remove a fixed correspondence between an identifier of a network slice and an identifier of a network slice instance for a same UE. An AMF or an SMF may obtain load statuses of network slice instances, and more flexibly select a proper network slice instance for the UE based on the load statuses of the network slice instances. This avoids a problem of resource shortage or communication congestion on a same network slice instance, thereby meeting an application requirement.

In this embodiment of this application, the UE may be a netbook, a tablet computer, a smartwatch, or the like. Alternatively, the UE may be another desktop device, a laptop device, a handheld device, a wearable device, a smart home device, or a vehicle-mounted device that has a radio communication function, for example, an ultra-mobile personal computer (Ultra-mobile Personal Computer, UMPC), a smart camera, a netbook, a personal digital assistant (Personal Digital Assistant, PDA), a portable multimedia player (Portable Multimedia Player, PMP), an AR (augmented reality) device or a VR (virtual reality) device, a flight vehicle, or a robot. A specific type, a structure, and the like of the UE are not limited in this embodiment of this application.

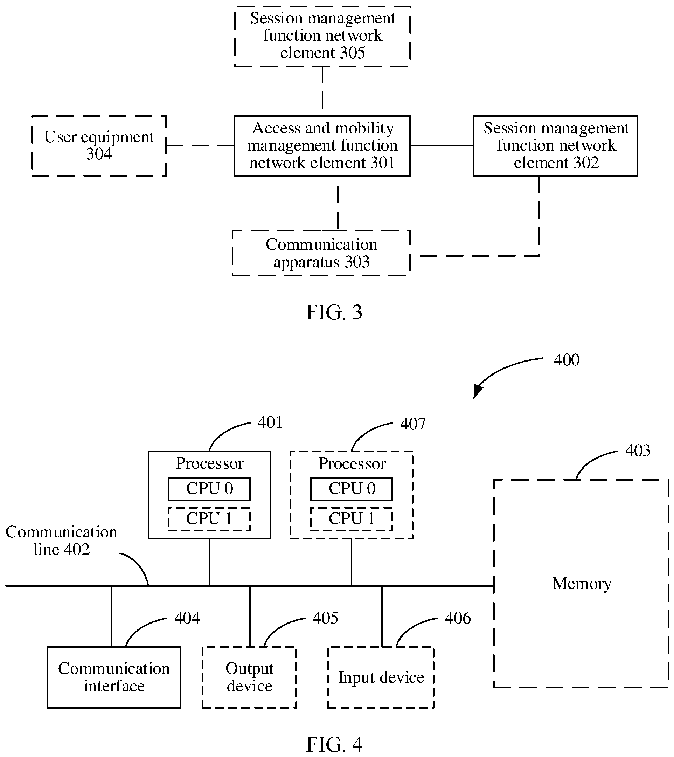

In addition, as shown in FIG. 3, an embodiment of this application further provides a communication system. The communication methods provided in embodiments of this application may be applied to the communication system shown in FIG. 3. The communication system 30 may include an access and mobility management function network element 301 and a session management function network element 302.

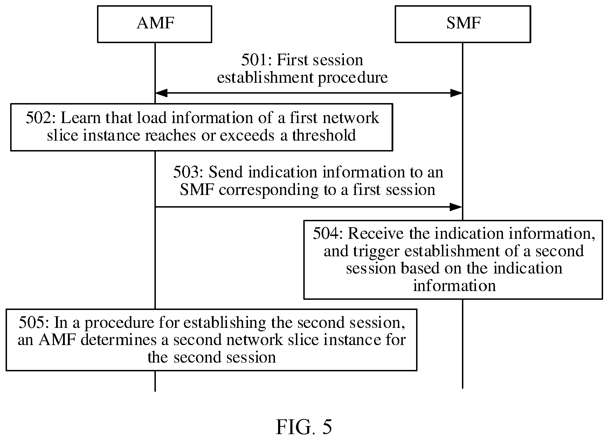

In an implementation, in the communication system 30 shown in FIG. 3, the session management function network element 302 may establish a first session, and the first session is served by a first network slice instance. When the access and mobility management function network element 301 learns that load information of the first network slice instance reaches or exceeds a threshold, the access and mobility management function network element 301 sends indication information to the session management function network element 302 corresponding to the first session, where the indication information is used to trigger establishment of a second session. The session management function network element 302 may trigger the establishment of the second session based on the indication information. The access and mobility management function network element 301 may determine a second network slice instance for the second session, where the second session is served by the second network slice instance, and the first network slice instance and the second network slice instance correspond to a same network slice. For detailed descriptions of the foregoing method, refer to related descriptions in the following methods shown in FIG. 5 to FIG. 7B. Details are not described herein again.

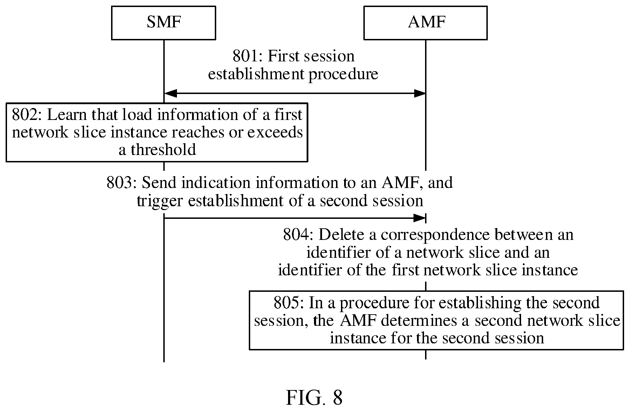

In another implementation, in the communication system 30 shown in FIG. 3, the session management function network element 302 may establish the first session, and send the indication information to the access and mobility management function network element 301 when learning that the load information of the first network slice instance reaches or exceeds the threshold. The indication information indicates that the load information of the first network slice instance reaches or exceeds the threshold, or indicates the access and mobility management function network element 301 to delete a correspondence between an identifier of the network slice and an identifier of the first network slice instance. The session management function network element 302 may initiate a session re-establishment procedure to establish the second session, where the second session is served by the second network slice instance, and the first network slice instance and the second network slice instance correspond to the same network slice. For detailed descriptions of the foregoing method, refer to related descriptions in the following methods shown in FIG. 8 to FIG. 9. Details are not described herein again.

Optionally, the communication system 30 further includes a communication apparatus 303. The communication apparatus 303 stores the load information of the first network slice instance in the network slice. The communication apparatus 303 may receive a first subscription message from a subscription network element, where the first subscription message includes the identifier of the first network slice instance. The subscription network element may be the access and mobility management function network element 301 or the session management function network element 302. The communication apparatus 303 sends a first notification message to the subscription network element, where the first notification message is used to notify the load information of the first network slice instance, or is used to notify that the load information of the first network slice instance reaches or exceeds the threshold. In this way, the subscription network element may determine, based on the first notification message, that the load information of the first network slice instance reaches or exceeds the threshold.

Optionally, the communication apparatus 303 may be a network slice selection function NSSF network element or a network slice admission control function NSACF network element.

Optionally, the communication system 30 further includes a user equipment 304. The user equipment 304 may send a second session establishment request message to the access and mobility management function network element 301, where the second session establishment request message includes the identifier of the network slice. The access and mobility management function network element 301 may send a request message to a network slice selection function network element, where the request message includes the identifier of the network slice, and is used to allocate a new network slice instance to the second session; and the access and mobility management function network element 301 receives a response message from the network slice selection function network element, where the response message includes an identifier of the second network slice instance.

Optionally, the communication system 30 further includes a session management function network element 305 corresponding to the second session. The access and mobility management function network element 301 may interact with the session management function network element 305 corresponding to the second session, to complete the establishment of the second session based on the second network slice instance.

The access and mobility management function network element 301 may select, based on the identifier of the second network slice instance, a session management function network element corresponding to the second session. The session management function network element corresponding to the second session is represented by the session management function network element 305. The session management function network element 305 may be a network element different from the session management function network element 302 or a same network element as the session management function network element 302. This is not limited in this application. It may be understood that the devices or network elements in the communication system 30 may directly communicate with each other, or may communicate with each other through forwarding by another device. This is not specifically limited in this embodiment of this application.

It may be understood that FIG. 3 is merely a diagram, and does not constitute a limitation on an application scenario of the technical solutions provided in this application. A person skilled in the art should understand that, in a specific implementation process, the communication system 30 may include fewer devices or network elements than those shown in FIG. 3, or the communication system 30 may further include another device or another network element, and a quantity of devices or network elements in the communication system 30 may also be determined according to a specific requirement.

It should be noted that the communication system shown in FIG. 1, FIG. 2, or FIG. 3 is merely used as an example, and is not intended to limit the technical solutions of this application. A person skilled in the art should understand that, in a specific implementation process, the communication system may further include another device or another network element, and a quantity of network elements of each type may also be determined according to a specific requirement.

Optionally, each network element in FIG. 1, FIG. 2, or FIG. 3 in embodiments of this application may be a functional module in a device. It may be understood that the foregoing function may be a network element in a hardware device, for example, a communication chip in a mobile phone, or may be a software function running on dedicated hardware, or may be a virtualized function instantiated on a platform (for example, a cloud platform).

For example, each network element in FIG. 1, FIG. 2, or FIG. 3 may be implemented by using a communication apparatus 400 in FIG. 4. FIG. 4 is a diagram of a hardware structure of a communication apparatus applicable to an embodiment of this application. The communication apparatus 400 includes at least one processor 401, a communication line 402, a memory 403, and at least one communication interface 404.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a path, for example, a bus, for transferring information between the components described above.

The communication interface 404 is configured to communicate with another device or communication network by using any transceiver-type apparatus, and is, for example, an Ethernet interface, a RAN interface, or a wireless local area network (wireless local area network, WLAN) interface.

The memory 403 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction structure or a data structure and that can be accessed by a computer, but is not limited thereto. The memory may exist independently, and is connected to the processor through the communication line 402. The memory may alternatively be integrated with the processor. The memory provided in this embodiment of this application may be usually non-volatile. The memory 403 is configured to store computer-executable instructions involved in executing the solutions of this application, and the processor 401 controls execution of the computer-executable instructions. The processor 401 is configured to execute the computer-executable instructions stored in the memory 403, to implement the methods provided in embodiments of this application.

Optionally, the computer-executable instructions in this embodiment of this application may also be referred to as application program code. This is not specifically limited in this embodiment of this application.

During specific implementation, in an embodiment, the processor 401 may include one or more CPUs such as a CPU 0 and a CPU 1 in FIG. 4.

During specific implementation, in an embodiment, the communication apparatus 400 may include a plurality of processors, for example, the processor 401 and a processor 407 in FIG. 4. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 400 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and may receive an input of a user in a plurality of manners. For example, the input device 406 may be a mouse, a keyboard, a touchscreen device, or a sensor device.

The communication apparatus 400 may be a general-purpose device or a special-purpose device. During specific implementation, the communication apparatus 400 may be a portable computer, a network server, a personal digital assistant (personal digital assistant, PDA), a mobile phone, a tablet computer, a wireless terminal, an embedded device, or a device having a structure similar to that in FIG. 4. A type of the communication apparatus 400 is not limited in this embodiment of this application.

The following describes in detail the communication methods provided in embodiments of this application.

It should be noted that names of messages between network elements, names of parameters in the messages, or the like in the following embodiments of this application are merely examples, and there may be other names in a specific implementation. This is not specifically limited in embodiments of this application.

It may be understood that some or all of the steps in embodiments of this application are merely examples, and other steps or variations of various steps may be further executed in embodiments of this application. In addition, the steps may be executed in a sequence different from that presented in embodiments of this application, and not all the steps in embodiments of this application need to be executed.

FIG. 5 shows a communication method according to an embodiment of this application. An AMF obtains a load status of a network slice instance. When determining that a load of an allocated network slice instance reaches a threshold, the AMF may trigger an SMF to re-establish a session, to migrate a current session of a user equipment to a new network slice instance. This avoids resource shortage or communication congestion on a network slice instance. The method includes steps 501 to 505.

Step 501: A first session establishment procedure.

The user equipment initiates a procedure for establishing a first session, and carries identifier information of the first session, where the identifier information is used to represent the first session. In the procedure for establishing the first session, a network side determines that the first session is served by a first network slice instance. For example, an identifier of the first network slice instance is an NSI-ID-1. For example, in the procedure for establishing the first session or in a registration procedure before the procedure for establishing the first session, the AMF may store, in a context of the AMF, a correspondence between an allowed network slice and the first network slice instance, for example, a correspondence between S-NSSAI-1 and the NSI-ID-1. Therefore, it is determined, based on the correspondence, that the first network slice instance serves the first session.

A procedure in which the AMF interacts with the SMF and the user equipment to establish a PDU session is an existing procedure. Therefore, this application briefly describes related steps by using only the following several possible implementations as examples. For a detailed implementation procedure, refer to an existing PDU session establishment procedure. Details are not described herein again.

The identifier information of the first session may be a PDU session ID.

Step 502: The AMF learns that load information of the first network slice instance reaches or exceeds the threshold.

For example, load information of a network slice instance may be specifically represented by using a quantity of user equipments that are allowed to access the network slice instance, or may be represented by using a quantity of sessions that are allowed to access the network slice instance, or may be represented by using a parameter such as a resource occupation status, a resource occupation rate, or a resource running status of the network slice instance. A specific representation form of the load information of the first network slice instance is not limited in this embodiment of this application.

For example, a core network uses a quantity of user equipments that are allowed to access a network slice instance to represent load information of the network slice instance. In this case, a maximum quantity of user equipments that are allowed to access the network slice instance, that is, a threshold Max(UE), may be set to N1. When a quantity of user equipments that currently access the first network slice instance is greater than or equal to the threshold N1, it is considered that the load information of the first network slice instance reaches or exceeds the threshold.

For another example, the core network uses a quantity of session devices that are allowed to access a network slice instance to represent load information of the network slice instance. In this case, a maximum quantity of sessions that are allowed to access the network slice instance, that is, a threshold Max (session), may be set to N2. When a quantity of sessions that currently access the first network slice instance is greater than or equal to the threshold N2, it is considered that the load information of the first network slice instance reaches or exceeds the threshold.

The AMF may request or subscribe to the load information of the first network slice instance from another network element, or subscribe to information indicating that the load information of the first network slice instance reaches or exceeds the threshold, to learn of a load status of the first network slice instance in a timely manner. When determining that the load information of the first network slice instance reaches or exceeds the threshold, the AMF executes step 503.

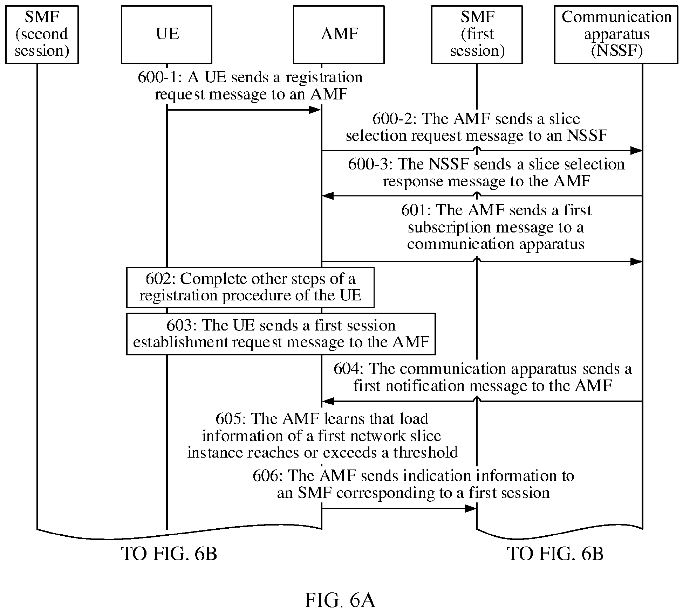

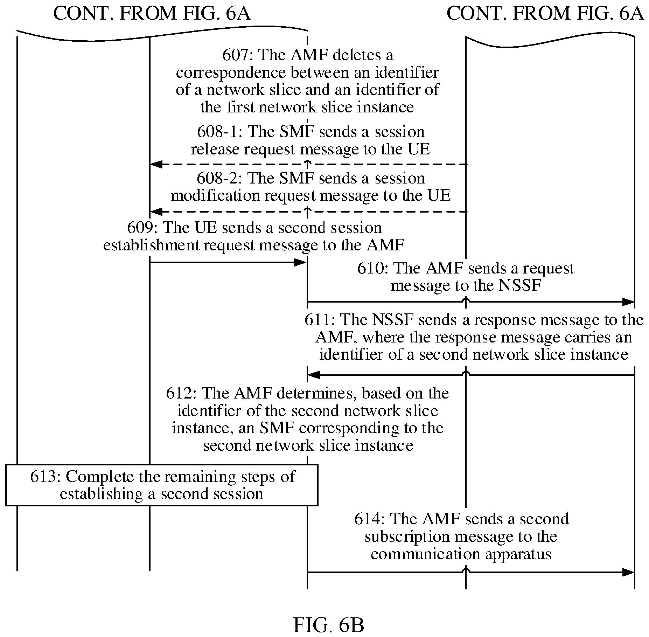

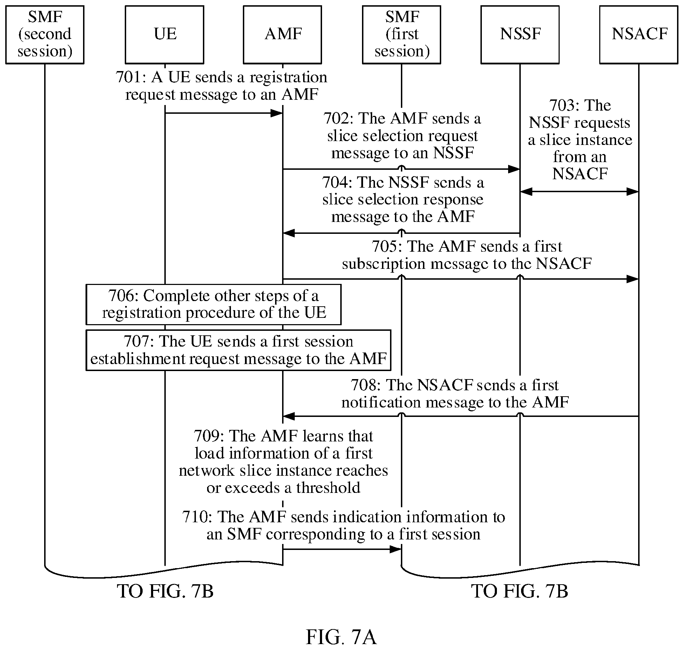

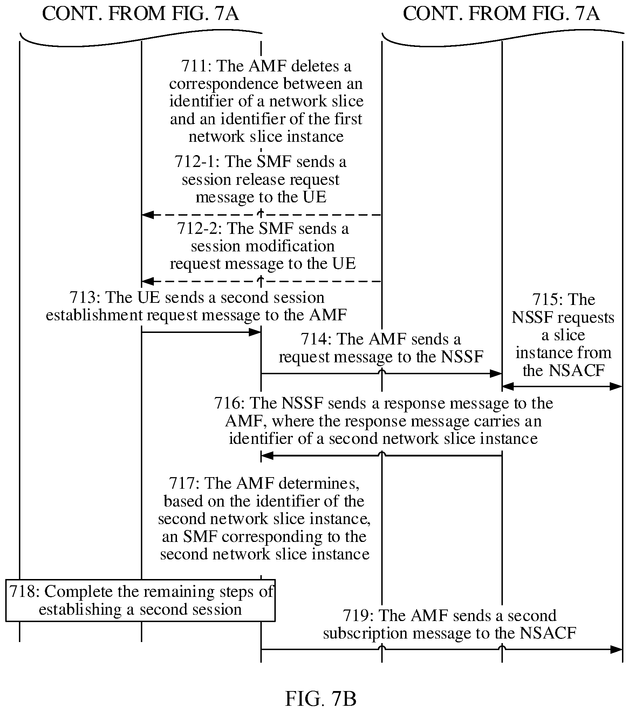

In an implementation, the AMF learns that the load information of the first network slice instance reaches or exceeds the threshold. Specifically, the AMF may subscribe to the load information of the first network slice instance from another network element, or subscribe to the information indicating that the load information of the first network slice instance reaches or exceeds the threshold, to learn of the load status of the first network slice instance in a timely manner. This will be further described with reference to FIG. 6A and FIG. 6B or FIG. 7A and FIG. 7B below.

Step 503: The AMF sends indication information to the SMF corresponding to the first session.

In a possible implementation, the indication information indicates, to the SMF corresponding to the first session, that the load information of the first network slice instance reaches or exceeds the threshold, so that the SMF may trigger, based on the indication information, the user equipment to establish a new session. The first session and the new session are associated with a same network slice. It may be understood that, after the AMF sends, to the SMF, the indication information indicating that the load information of the first network slice instance reaches or exceeds the threshold, the SMF may determine, based on the load status of the first network slice instance, whether to trigger the user equipment to establish the new session.

In another possible implementation, the indication information is used to indicate the SMF corresponding to the first session to re-establish a session, so that the SMF triggers, based on the indication information, the user equipment to establish a new session. The first session and the new session are associated with the same network slice. It may be understood that after learning that the load information of the first network slice instance reaches or exceeds the threshold, the AMF directly indicates the SMF to trigger the user equipment to establish a new session.

In addition, regardless of the foregoing implementation, when sending the indication information to the SMF corresponding to the first session, the AMF may further send, to the SMF corresponding to the first session, identifier information corresponding to the first session, so that the SMF determines, based on the identifier information, a session of the user equipment whose context needs to be released.

In step 502, when the AMF learns that the load information of the first network slice instance corresponding to the first session reaches or exceeds the threshold, step 503 is executed. To be specific, the AMF indicates, by using the indication information, the SMF corresponding to the first session to trigger establishment of a second session.

In step 503, the AMF may determine, based on the identifier of the first network slice instance, the first session corresponding to the first network slice identifier and the SMF corresponding to the first session, and then determine to send the indication information to the SMF. Specifically, the AMF may determine, based on the identifier of the first network slice instance and a context of the UE that is locally stored in the AMF, a PDU session that is associated with the first network slice instance, and further determine the SMF corresponding to the first session associated with the first network slice instance. Optionally, the indication information may further include the identifier of the first network slice instance.

Optionally, in step 503, the indication information sent by the AMF to the SMF corresponding to the first session may be carried in a session update request message (Nsmf_PDUSession_Update Request), to indicate that the current first network slice instance is overloaded, and the first session of the current UE needs to be migrated to a new network slice instance. In a specific implementation process, the indication information may be used to indicate to re-establish a session, so that the SMF corresponding to the first session may trigger, based on the indication information, the user equipment to establish a new session. Alternatively, the indication information may include an indication that the load information of the first network slice instance reaches or exceeds the threshold, and the SMF determines, based on the indication, to trigger the user equipment to establish a new session.

Step 504: The SMF receives the indication information, and triggers the establishment of the second session based on the indication information.

Specifically, the SMF may trigger, based on the indication information, the UE to request to establish a new session. For a detailed process of triggering the UE to request to establish a new session, refer to an existing PDU session re-establishment procedure or related descriptions in the following implementation shown in FIG. 6A and FIG. 6B in this application. Details are not described herein again.

Step 505: In a procedure for establishing the second session, the AMF determines a second network slice instance for the second session.

The second session may be served by the second network slice instance, and the first network slice instance and the second network slice instance correspond to the same network slice.

In the foregoing implementation, the AMF obtains a load status of a network slice instance. When determining that a load of an allocated network slice instance reaches or exceeds a threshold, the AMF may trigger the SMF to re-establish a session, to migrate a current session of the user equipment to a new network slice instance. This avoids resource shortage or communication congestion on a network slice instance.

In the following embodiments shown in FIG. 6A and FIG. 6B and FIG. 7A and FIG. 7B, the AMF may be used as a subscription network element to request, from a communication apparatus, subscription to load information of a specified network slice instance. For example, a communication apparatus in FIG. 6A and FIG. 6B is an NSSF, and a communication apparatus in FIG. 7A and FIG. 7B is an NSACF. By using such a subscription mechanism, when determining that load information of a network slice instance that is requested by the subscription network element reaches or exceeds a threshold, the communication apparatus may send a subscription notification to the subscription network element, to trigger a change of the network slice instance.

For example, FIG. 6A and FIG. 6B are diagrams of a communication method according to an embodiment of this application. The method may include the following steps.

Step 600-1: A UE sends a registration request message to an AMF.

The registration request message (Registration Request) is used to request a slice service. The registration request message may include requested NSSAI (Requested NSSAI), and the requested NSSAI includes at least one piece of S-NSSAI.

Correspondingly, the AMF receives the registration request message from the UE.

Step 600-2: The AMF sends a slice selection request message to an NSSF.

For example, the AMF sends a slice selection request message (Nnssf_NSSelection_Get request) to the NSSF based on the requested NSSAI in the registration request message. The slice selection request message carries location information of the UE, the requested NSSAI, and information about a network slice to which the UE subscribes, and is used to trigger the NSSF to select a network slice for the UE and determine allowed NSSAI (Allowed NSSAI).

Step 600-3: The NSSF sends a slice selection response message to the AMF.

For example, the NSSF may determine the allowed NSSAI based on the location information of the UE, the requested NSSAI, and the network slice to which the UE subscribes, and then send the slice selection response message to the AMF.

Optionally, the NSSF may further select a corresponding network slice instance for each piece of S-NSSAI in the allowed NSSAI, to obtain a corresponding NSI ID, and determine identifier information of an NRF network element corresponding to each NSI ID. The NRF is configured to subsequently discover another network element in the network slice instance, for example, an SMF corresponding to the network slice instance. For a specific process, refer to an existing interaction procedure. Details are not described herein in this application.

The slice selection response message (Nnssf_NSSelection_Get response) includes the allowed NSSAI, the NSI ID corresponding to each piece of S-NSSAI in the allowed NSSAI, and an NRF ID corresponding to each NSI ID. In this way, the AMF may store, in a context of the UE, the information carried in the Nnssf_NSSelection_Get response, and store a correspondence between an identifier of a network slice and an identifier of a network slice instance.

For example, the allowed NSSAI includes S-NSSAI-1 and S-NSSAI-2. In a core network, a network slice instance 1 and a network slice instance 2 are deployed based on the S-NSSAI-1, and a network slice instance 3 and a network slice instance 4 are deployed based on the S-NSSAI-2.

Based on the slice selection processes in the foregoing steps 600-1 to 600-3 in this application, a network slice instance selected by the NSSF for the S-NSSAI-1 requested by the UE is the network slice instance 1, and a network slice instance selected by the NSSF for the S-NSSAI-2 requested by the UE is the network slice instance 3. NRFs selected by the NSSF for the UE are as follows: an NFR corresponding to the network slice instance 1 is an NRF network element 1, and an NFR corresponding to the network slice instance 3 is an NRF network element 3.

**Table 2: Network slice instance and NRF corresponding to a network slice**

| Allowed NSSAI | Network slice instance selected for the UE | NRF corresponding to the network slice instance |
|---|---|---|
| S-NSSAI-1 | Network slice instance 1 and NSI-ID-1 | NRF network element 1 |
| S-NSSAI-2 | Network slice instance 3 and NSI-ID-3 | NRF network element 3 |

In addition, optionally, in a registration procedure, step 601 may be further executed.

Step 601: The AMF sends a first subscription message to a communication apparatus.

Correspondingly, the communication apparatus may receive the first subscription message from the AMF.

The AMF that requests subscription may be the foregoing subscription network element, and the communication apparatus that receives the subscription stores and maintains load information of at least one network slice instance in a network slice. In the example shown in FIG. 6A and FIG. 6B, the communication apparatus may be specifically an NSSF.

The first subscription message may include an identifier of a network slice instance that is requested to be subscribed to.

For example, after the foregoing step 600-3, the AMF may subscribe to the one or more network slice instances after storing the correspondence between an identifier of a network slice and an identifier of a network slice instance in the context of the UE. The first subscription message may be used to subscribe to load information of each network slice instance, or may be used to subscribe to an event that the load information of each network slice instance reaches or exceeds a threshold. Based on the subscription, when load information of a network slice instance reaches or exceeds the threshold, the AMF may learn of the load information in a timely manner.

For example, if the first subscription message is used to subscribe to load information of a network slice instance, when requesting subscription from the communication apparatus, the AMF may send an identifier of a network slice instance to which the AMF requests to subscribe. If the first subscription message is used to subscribe to an event that load information of a network slice instance reaches or exceeds the threshold, an identifier of the subscription event may be configured on the AMF in advance. When requesting subscription from the communication apparatus, the AMF may send the identifier of the subscription event and the identifier of the network slice instance to which the AMF requests to subscribe.

For example, the first subscription message may include an identifier of a first network slice instance that is requested to be subscribed to. For example, if the first network slice instance is the network slice instance 1 in the foregoing example, the first subscription message is used to request to subscribe to load information of the network slice instance 1, or request to subscribe to information indicating that the load information of the network slice instance 1 reaches or exceeds the threshold. Optionally, the first subscription message is further used to request to subscribe to load information of the network slice instance 3, or information indicating that the load information of the network slice instance 3 reaches or exceeds the threshold. For example, the first subscription message may include identifiers of the network slice instance 1 and the network slice instance 3.

The communication apparatus stores load information of the first network slice instance in a network slice. Further, the communication apparatus also stores load information of a second network slice instance in the network slice. Optionally, the communication apparatus further stores and maintains load information of each network slice instance deployed in the network.

It should be noted that, in addition to executing the foregoing step 601 in the registration procedure, that the AMF sends the first subscription message to the communication apparatus in step 601 may be performed after the registration procedure is completed, or may be performed in a session establishment procedure, or may be performed after the session establishment procedure is completed. For example, in FIG. 6A and FIG. 6B, only an example in which the AMF requests subscription from the communication apparatus in the registration procedure is used. This is not specifically limited in this embodiment of this application.

Step 602: Complete other steps of the registration procedure of the UE.

Interaction between the UE and the AMF to perform the registration procedure of the UE is an existing procedure. Therefore, this application provides only brief descriptions of related steps as an example. For a detailed registration procedure, refer to the existing UE registration procedure. Details are not described herein again.

In an implementation, a process of establishing a first session after the registration is completed may specifically include:
Step 603: The UE sends a first session establishment request message to the AMF.

The UE initiates a session establishment procedure, that is, the UE sends the first session establishment request message to the AMF. The first session establishment request message carries information such as an identifier of the first session, an identifier of a network slice, for example, the S-NSSAI-1, and a data network name (data network name, DNN).

Correspondingly, the AMF receives the first session establishment request message from the UE, determines, based on the S-NSSAI-1 in the first session establishment request message and by querying the context of the UE, a first network slice instance (for example, the network slice instance 1) and an NRF ID (the NRF network element 1) corresponding to the S-NSSAI, requests the NRF to discover an SMF network element corresponding to the first network slice instance, obtains an SMF ID, and interacts with the SMF network element based on the SMF ID, to execute a procedure for establishing the first session.

In the procedure for establishing the first session or after the establishment of the first session is completed, if a load of the first network slice instance reaches or exceeds the threshold, the communication apparatus executes the following step 604 based on previous subscription of the AMF.

Step 604: The communication apparatus sends a first notification message to the AMF.

Optionally, if the first subscription message is used to request to subscribe to the load information of the first network slice instance, the first notification message indicates the load information of the first network slice instance. The first notification message may include current load information of the first network slice instance. Specifically, the communication apparatus may determine, based on an identifier of a network slice instance that is requested to be subscribed to in the first subscription message, load information corresponding to the network slice instance that is requested to be subscribed to.

In a possible implementation, the communication apparatus may periodically carry the load information corresponding to the first network slice instance in the first notification message, and send the first notification message to the AMF. It may be understood that the communication apparatus notifies, based on a subscription request, the AMF of the load information corresponding to the network slice instance. The communication apparatus may not determine whether the load information corresponding to the network slice instance is greater than or equal to the preset threshold, but may directly send current load information of the network slice instance to the AMF. The AMF side determines, based on the current load information of the network slice instance, whether the threshold is reached.

In another possible implementation, the communication apparatus sends the current load information of the network slice instance to the AMF only when determining that the load information corresponding to the network slice instance is greater than or equal to the preset threshold. In this case, the current load information of the first network slice instance is greater than or equal to the preset threshold. In other words, when determining that the load information of the first network slice instance reaches or exceeds the threshold, the communication apparatus may send the first notification message to the AMF. The first notification message carries the current load information of the first network slice instance, to implicitly indicate to the AMF that the load information of the first network slice instance reaches or exceeds the threshold. It may be understood that the communication apparatus first determines, based on the subscription request, whether the load information corresponding to the network slice instance is greater than or equal to the preset threshold. When the load information corresponding to the network slice instance is greater than or equal to the preset threshold, the communication apparatus sends the load information of the network slice instance to the AMF. In this case, the AMF may obtain a specific status of current load information.

Alternatively, if the first subscription message is used to request to send a notification to the AMF when the load information of the first network slice instance reaches or exceeds the threshold, the first notification message is used to notify that the load information of the first network slice instance reaches or exceeds the threshold. In other words, when determining that the load information of the first network slice instance reaches or exceeds the threshold, the communication apparatus may send the first notification message to the AMF. The first notification message carries a specific indication bit, to explicitly indicate to the AMF that the load information of the first network slice instance reaches or exceeds the threshold. It may be understood that the communication apparatus first determines, based on the subscription request, whether the load information corresponding to the network slice instance is greater than or equal to the preset threshold. When the load information corresponding to the network slice instance is greater than or equal to the preset threshold, the communication apparatus sends indication information to the AMF. The indication information indicates that the load information of the first network slice instance reaches or exceeds the threshold. In this case, the AMF may not need to sense the current load information.

In this case, an indicated event that a load of a network slice instance reaches or exceeds the threshold may be defined in advance. After receiving subscription to the event, the communication apparatus may send a notification message when determining that the event occurs. For example, the first subscription message may be specifically used to subscribe to the event that load information of a network slice instance reaches or exceeds the threshold. For example, when the AMF requests subscription from the communication apparatus, the first subscription message may carry the identifier of the subscription event and the identifier of the network slice instance to which the AMF requests to subscribe.

Optionally, when the first subscription message includes identifiers of a plurality of network slice instances, the first subscription message may be used to request to subscribe to load information of two or more network slice instances. The communication apparatus may monitor load information of a network slice instance that is requested to be subscribed to. When load information of any one or more network slice instances reaches or exceeds the threshold, the communication apparatus may be triggered to send one or more first notification messages to the subscription network element.

In addition, the first notification message may further include an identifier of a network slice instance, indicating a network slice instance in the plurality of network slice instances that are requested to be subscribed to, where load information of the network slice instance reaches or exceeds the threshold. Alternatively, the first notification message may further include a correspondence between an identifier of a network slice instance and indication information (and/or current load information) indicating that load information corresponding to the network slice instance reaches or exceeds the threshold.

For example, with reference to the foregoing descriptions, the AMF may request, from the communication apparatus, to subscribe to the load information of the network slice instance 1 and the load information of the network slice instance 3. The first subscription message may include the identifiers of the network slice instance 1 and the network slice instance 3. If the communication apparatus determines that the load information of the network slice instance 1 exceeds the threshold, the first notification message sent to the AMF may include the network slice instance 1. If the communication apparatus determines that both the load information of the network slice instance 1 and the load information of the network slice instance 3 exceed the threshold, the first notification message sent to the AMF may include the identifiers of the network slice instance 1 and the network slice instance 3, and indication information (and/or current load information) indicating that the load information respectively corresponding to the network slice instance 1 and the network slice instance 3 reaches or exceeds the threshold.

In an implementation, the threshold corresponding to load information of a network slice instance may be a threshold configured by the communication apparatus in advance. For example, a maximum quantity of user equipments that are allowed to access the first network slice instance or a maximum quantity of sessions that are allowed to be established for the first network slice instance may be configured on the NSSF in advance, and is used as the threshold corresponding to the load information of the first network slice instance. Alternatively, the threshold may be provided by the subscription network element for the communication apparatus. Optionally, the first subscription message may further include the threshold corresponding to the first network slice instance. In other words, in addition to identifier information of the first network slice instance, the first subscription message sent by the AMF to the NSSF may further include the threshold of the load information corresponding to the first network slice instance, to indicate the NSSF to send the first notification message to the AMF when the load information corresponding to the first network slice instance reaches or exceeds the threshold.

Step 605: The AMF learns that the load information of the first network slice instance reaches or exceeds the threshold.

Specifically, the AMF may determine, based on the first notification message, that the load information of the first network slice instance reaches or exceeds the threshold.

Step 606: The AMF sends indication information to the SMF corresponding to the first session.

For details, refer to related descriptions of the foregoing step 503.

In an implementation, as shown in FIG. 6A and FIG. 6B, the method may further include the following step:
Step 607: The AMF deletes a correspondence between an identifier of a network slice and the identifier of the first network slice instance.

It can be learned from step 600-3 in the foregoing implementation process that the AMF stores the correspondence between the identifier of the network slice and the identifier of the first network slice instance in the context of the UE. In other words, when the AMF learns that the load information of the first network slice instance corresponding to the first session has reached or exceeded the threshold, the AMF may delete the previously stored correspondence between the identifier of the network slice and the identifier of the first network slice instance. In this case, after the AMF subsequently receives a new session establishment request initiated by the UE, because there is no correspondence between the identifier of the network slice and the identifier of the first network slice instance in the AMF, the AMF requests, based on a new session, for example, the second session, allocation of a new network slice instance, for example, the second network slice instance, to provide a service. This avoids a problem of resource shortage or communication congestion caused by using a same network slice instance.

It should be noted that a time sequence relationship between the foregoing steps 606 and 607 is not limited in this embodiment of this application. In other words, the AMF may first delete the correspondence between the identifier of the network slice and the identifier of the first network slice instance, and then send the indication information, or may first send the indication information to the SMF corresponding to the first session, and then delete the correspondence between the identifier of the network slice and the identifier of the first network slice instance.

Further, the SMF initiates a session re-establishment procedure based on the indication information. A specific procedure for establishing the second session may include the following steps.

Considering that different PDU sessions have different PDU session attributes, the SMF may select, based on an attribute of a current session, a session that needs to be migrated to a new session instance. In other words, the SMF may determine, based on the attribute of the current session, a user equipment that needs to establish a new session, for example, the second session.

A PDU session attribute mainly includes a PDU session in a session and service continuity (session and service continuity, SSC) mode 1, mode 2, or mode 3. That the PDU session attribute is the SSC mode 1 means that an anchor of the PDU session needs to remain unchanged in a life cycle. That the PDU session attribute is the SSC mode 2 means that when a current PDU session cannot be maintained, an old session may be released, and then a new session is established. That the PDU session attribute is the SSC mode 3 means that when a current PDU session cannot be maintained, first a new session may be established, and the new session and an old session both exist. Then, the UE changes from the old session to the new session, and the old session is released. In this embodiment of this application, the user equipment needs to be triggered to establish a new session, resulting in a specific service interruption on a session in the SSC mode 1. Therefore, the SMF may determine a session whose PDU session attribute is the SSC mode 2 or the SSC mode 3, and then trigger the user equipment to establish a new session corresponding to the session in the SSC mode 2 or the SSC mode 3.

Optionally, the SMF may specifically initiate different session re-establishment procedures based on different PDU session attributes.

Step 608-1: The SMF sends a session release request message to the UE.

Specifically, if the current first session is a session in the SSC mode 2, the SMF may send a session release request message (PDU Session Release Command message) to the UE, to trigger the UE to immediately release the current session. Then, the UE initiates a procedure for establishing a new session.

Step 608-2: The SMF sends a session modification request message to the UE.

If the current first session is a session in the SSC mode 3, the SMF may send a session modification request message (PDU Session Modification Command) to the UE, to trigger the UE to first establish a new session, for example, the second session, and then delete the first session.

In an implementation, the AMF may determine the second network slice instance for the second session by using the following steps. For example, the following steps may be included.

Step 609: The UE sends a second session establishment request message to the AMF.

The second session establishment request message includes an identifier of a network slice, and the identifier of the network slice is the same as the identifier of the network slice that is carried in the first session establishment request message sent by the UE when the first session is established in the foregoing step 603. In addition, the second session establishment request message may further include information such as an identifier of the second session and a DNN.

Correspondingly, the AMF receives the second session establishment request message from the UE. Because the AMF deletes the correspondence between the identifier of the network slice and the identifier of the first network slice instance in the implementation process of the foregoing step 607, the AMF requests the NSSF again to allocate a new network slice instance to the second session of the UE.

Step 610: The AMF sends a request message to the NSSF.

Step 611: The NSSF sends a response message to the AMF, where the response message carries an identifier of the second network slice instance.

For example, the request message may be a slice selection request message, and the response message may be a slice selection response message. Similar to the foregoing steps 600-2 and 600-3, the AMF sends a slice selection request message to the NSSF, where the request message includes an identifier of a network slice that is the same as that in the slice selection request message in the foregoing step 600-2.

For example, the network slice instance 1 and the network slice instance 2 are deployed based on the S-NSSAI-1 in the core network. In the slice selection process in the foregoing steps 600-1 to 600-3, the network slice instance selected by the NSSF for the S-NSSAI-1 requested by the UE is the network slice instance 1. However, the current network slice instance 1 is overloaded, and the network slice instance re-selected by the NSSF for the S-NSSAI-1 is the network slice instance 2.

The NSSF may allocate a new network slice identifier, for example, the second network slice instance, to the requested network slice, and send a response message (a slice selection response message) to the AMF, where the response message carries the identifier of the second network slice instance. In addition, the response message sent by the NSSF to the AMF may further carry an identifier of an NRF network element corresponding to the second network slice instance, to subsequently discover another network element in the second network slice instance.

Step 612: The AMF determines, based on the identifier of the second network slice instance, an SMF corresponding to the second network slice instance.

The AMF requests, based on the second network slice instance and the NRF ID that correspond to the S-NSSAI and that are obtained in step 611, the NRF to discover the SMF network element corresponding to the second network slice instance. For example, the AMF determines the SMF corresponding to the second network slice instance. For a specific process, refer to an existing interaction procedure. Details are not described herein again in this application. After the second session is successfully established, the AMF maintains a correspondence between the identifier (for example, a PDU session ID) of the second session, the S-NSSAI, the identifier of the second network slice instance, that is, the NSI-ID-2, and an SMF ID corresponding to the second session.

It should be noted that the SMF corresponding to the second network slice instance may be the same as or different from the SMF corresponding to the first network slice instance. Specifically, if the SMF corresponding to the second network slice instance is the same as the SMF corresponding to the first network slice instance, it may be understood that the same SMF may serve both the first network slice instance and the second network slice instance. The SMF may serve the first session by using a resource of the first network slice instance, and the SMF may further serve the second session by using a resource of the second network slice instance. If the SMF corresponding to the second network slice instance is different from the SMF corresponding to the first network slice instance, it may be understood that different network slice instances correspond to different SMFs.

Step 613: Complete the remaining steps of establishing the second session.

The AMF interacts with the SMF corresponding to the second network slice instance and the UE, to complete establishment of the second session based on the second network slice instance. For a detailed implementation procedure, refer to an existing PDU session establishment procedure. Details are not described herein again.

By using the foregoing implementation, an AMF may obtain, in a timely manner through subscription, load information of a network slice instance that serves a current session. Therefore, when the load information of the network slice instance reaches or exceeds a preset threshold, establishment of a new session is triggered, a previously stored correspondence between a network slice and a network slice instance is deleted, and a new network slice instance is requested to be allocated to the new session. This avoids a problem of resource shortage or communication congestion caused by subsequent continuous use of a same network slice instance. By using the foregoing implementation of this application, another network slice instance with plenty of resources deployed in the network can be flexibly used, thereby improving utilization of network slice resources.

Based on the mechanism that the AMF subscribes to a load status of a network slice instance provided in this application, the AMF may further subscribe to a load status of a new network slice instance from the NSSF. For example, the following steps are included:
Step 614: The AMF sends a second subscription message to the communication apparatus.

The second subscription message includes the identifier of the second network slice instance, and the second subscription message is used to request to subscribe to the load information of the second network slice instance, or is used to request to send a notification to the AMF when the load information of the second network slice instance reaches or exceeds the threshold. For example, the NSSF may send a second notification message to the AMF when the load information of the second network slice instance reaches or exceeds the threshold.

It should be noted that, it can be learned from the foregoing content that a network element that requests subscription from the communication apparatus may be referred to as a subscription network element. In the embodiment shown in FIG. 6A and FIG. 6B, the subscription network element that sends the first subscription message is an AMF, and the subscription network element that sends the second subscription message is still the same AMF.

For a manner in which the AMF subscribes to the second network slice instance, refer to a manner in which the AMF subscribes to the first network slice instance. Details are not described herein again.

It should be noted that step 614 in which the AMF sends the second subscription message to the communication apparatus may alternatively be in the second session establishment procedure. For example, in FIG. 6A and FIG. 6B, only an example in which the AMF requests subscription from the communication apparatus after the establishment of the second session is completed is used. This is not specifically limited in this embodiment of this application.

In addition, this application further provides an implementation. As shown in FIG. 7A and FIG. 7B, an AMF may be used as a subscription network element to request subscription from a communication apparatus. For example, in FIG. 7A and FIG. 7B, an example in which the communication apparatus may be an NSACF is used. The NSACF stores and maintains load information of a first network slice instance in a network slice and load information of another network slice instance.

Step 701: A UE sends a registration request message to the AMF.

Refer to the foregoing step 600-1.

Step 702: The AMF sends a slice selection request message to an NSSF.

Refer to the foregoing step 600-2.

Because the NSACF stores and maintains the load information of the network slice instance in the network slice, the NSSF may request the NSACF to allocate a network slice instance. As shown in FIG. 7A and FIG. 7B, step 703 is executed.

Step 703: The NSSF requests a slice instance from the NSACF.

Specifically, the NSSF determines allowed NSSAI based on location information of the UE, requested NSSAI, and a network slice to which the UE subscribes, which are carried in the slice selection request message in the foregoing step 702. Then, the NSSF sends a slice instance request message to the NSACF, where the slice instance request message carries the allowed NSSAI.

Correspondingly, the NSACF receives the slice instance request message from the NSSF, determines, based on a load status of a current network slice instance, to allocate an NSI ID corresponding to each piece of S-NSSAI in the allowed NSSAI, and determines identifier information of an NRF network element corresponding to the NSI ID. Then, the NSACF sends a slice instance response message to the NSSF, where the slice instance response message includes the allowed NSSAI, the NSI ID corresponding to each piece of S-NSSAI in the allowed NSSAI, and an NRF ID corresponding to each NSI ID.

For example, the allowed NSSAI includes S-NSSAI-1 and S-NSSAI-2. A network slice instance selected by the NSACF for the S-NSSAI-1 is a network slice instance 1, and a corresponding identifier is NSI-ID-1. A network slice instance selected for the S-NSSAI-2 is a network slice instance 3, and a corresponding identifier is NSI-ID-3.

Step 704: The NSSF sends a slice selection response message to the AMF.

Therefore, similar to step 600-3 in FIG. 6A and FIG. 6B, the NSSF sends the slice selection response message to the AMF, where the slice selection response message carries the NSI ID corresponding to each piece of S-NSSAI in the allowed NSSAI and the NRF ID corresponding to each NSI ID. Therefore, the AMF may store, in a context of the UE, the information carried in the slice selection response message, and store a correspondence between an identifier of a network slice and an identifier of a network slice instance.

A subsequent UE registration procedure is similar to step 602 in FIG. 6A and FIG. 6B. It should be noted that because the NSACF stores and maintains the load information of the network slice instance in the network slice, the AMF obtains the load information of the allocated first network slice instance and subscribes to the load information from the NSACF. A process of subscribing to and obtaining the load information of the network slice instance by the AMF may include step 705.

Step 705: The AMF sends a first subscription message to the NSACF.

Optionally, in addition to executing step 705 in the registration procedure to request subscription from the NSACF, the AMF may send the first subscription message to the communication apparatus NSACF after the registration procedure is completed, in a session establishment procedure, or after the session establishment procedure is completed. For example, in FIG. 7A and FIG. 7B only an example in which the AMF sends the first subscription message to the NSACF in the registration procedure to request to subscribe to the load information of the network slice instance is used. This is not specifically limited in this embodiment of this application.

In addition, a method for sending, by the AMF, the first subscription message to the NSACF may be as follows: The AMF may directly send the first subscription message to the NSACF, or the AMF may first send the first subscription message to the NSSF, and then the NSSF transfers the first subscription message to the NSACF. The method for sending, by the AMF, the first subscription message to the NSACF is not limited in this embodiment of this application.

Step 706: Complete other steps of the registration procedure of the UE.

Refer to other steps of an existing UE registration procedure, and details are not described herein again.

Step 707: The UE sends a first session establishment request message to the AMF.

Refer to the foregoing step 603.

Step 708: The NSACF sends a first notification message to the AMF.

Similarly, when the NSACF determines that the load information corresponding to the first network slice instance reaches or exceeds a threshold, the NSACF sends the first notification message to the AMF. For descriptions of the first subscription message and the first notification message, refer to related descriptions in the embodiment shown in FIG. 6A and FIG. 6B. Details are not described herein again.

Step 709: The AMF learns that the load information of the first network slice instance reaches or exceeds the threshold.

Step 710: The AMF sends indication information to an SMF corresponding to a first session.

Step 711: The AMF deletes a correspondence between an identifier of a network slice and an identifier of the first network slice instance.

Step 712-1: The SMF sends a session release request message to the UE.

Step 712-2: The SMF sends a session modification request message to the UE.

Step 713: The UE sends a second session establishment request message to the AMF.

Step 714: The AMF sends a request message to the NSSF.

For the foregoing steps 709 to 714, refer to related descriptions of steps 605 to 610 in the embodiment shown in FIG. 6A and FIG. 6B.

After step 714, the implementation shown in FIG. 7A and FIG. 7B further includes the following steps.

Step 715: The NSSF requests a slice instance from the NSACF.

Because the NSACF stores and maintains the load information of the network slice instance in the network slice, the NSSF may request the NSACF to re-allocate a network slice instance to a network slice. For example, the network slice instance 1 and the network slice instance 2 are deployed based on the S-NSSAI-1 in the core network. In the foregoing step 703, the network slice instance selected by the NSACF for the S-NSSAI-1 is the network slice instance 1. Because the network slice instance 1 is overloaded, the NSACF may allocate the network slice instance 2 to the network slice S-NSSAI-1.

Then, the NSSF may execute step 716 based on an identifier of a second network slice instance carried in a response from the NSACF that is obtained in step 715.

Step 716: The NSSF sends a response message to the AMF, where the response message carries the identifier of the second network slice instance.

Step 717: The AMF determines, based on the identifier of the second network slice instance, an SMF corresponding to the second network slice instance.

Step 718: Complete the remaining steps of establishing a second session.

Because the NSACF stores and maintains the load information of the network slice instance in the network slice, the AMF may further subscribe to, from the NSACF, load information of the second network slice instance corresponding to the second session.

By using the foregoing implementation, an AMF may obtain, in a timely manner by subscribing to an NSACF, load information of a network slice instance that serves a current session. Therefore, when the load information of the network slice instance reaches or exceeds a preset threshold, establishment of a new session is triggered, a previously stored correspondence between a network slice and a network slice instance is deleted, and a new network slice instance is requested to be allocated to the new session. This avoids a problem of resource shortage or communication congestion caused by subsequent continuous use of a same network slice instance. By using the foregoing implementation of this application, another network slice instance with plenty of resources deployed in the network can be flexibly used, thereby improving utilization of network slice resources.

Based on the mechanism that the AMF subscribes to a load status of a network slice instance provided in this application, the AMF may further subscribe to a load status of a new network slice instance from the NSACF. For example, the following steps are included:
Step 719: The AMF sends a second subscription message to the NSACF.

The second subscription message may include the identifier of the second network slice instance, and the second subscription message is used to request to subscribe to the load information of the second network slice instance, or is used to request to send a notification to the AMF when the load information of the second network slice instance reaches or exceeds the threshold. For example, the second network slice instance is the network slice instance 2. The NSACF may send a second notification message to the AMF when load information of the network slice instance 2 reaches or exceeds the threshold, to further re-allocate a network slice instance. This avoids a problem of resource shortage or communication congestion.

Similarly, a method for sending, by the AMF, the second subscription message to the NSACF may be as follows: The AMF may directly send the second subscription message to the NSACF, or the AMF may first send the second subscription message to the NSSF, and then the NSSF transfers the second subscription message to the NSACF. A method for sending, by the AMF, the second subscription message to the NSACF is not limited in this embodiment of this application.

Optionally, the NSACF in the embodiment shown in FIG. 8 may be alternatively replaced with an NWDAF network element, which may also be configured to implement the method for determining a network slice instance in the foregoing embodiment. For a specific process, refer to the foregoing content. Details are not described again in this application.

In addition, an embodiment of this application further provides another communication method. As shown in FIG. 8, an SMF obtains a load status of a network slice instance. When determining that load information of a network slice instance allocated to a current session reaches or exceeds a threshold, the SMF may trigger session re-establishment, and a core network re-allocates a network slice instance to a new session, to migrate a current session of a user equipment to the new network slice instance. This avoids resource shortage or communication congestion on a network slice instance.

For example, FIG. 8 includes the following steps.

Step 801: A first session establishment procedure.

The user equipment initiates a procedure for establishing a first session, and carries identifier information of the first session, where the identifier information is used to represent the first session. In the procedure for establishing the first session, a network side determines that the first session is served by a first network slice instance. For example, an identifier of the first network slice instance is an NSI-ID-1. For example, in the procedure for establishing the first session or in a registration procedure before the procedure for establishing the first session, an AMF may store, in a context of the AMF, a correspondence between an allowed network slice and the first network slice instance, for example, a correspondence between S-NSSAI-1 and the NSI-ID-1. Therefore, it is determined, based on the correspondence, that the first network slice instance serves the first session.

A procedure in which the AMF interacts with the SMF and the user equipment to establish a PDU session is an existing procedure. Therefore, this application briefly describes related steps by using only the following several possible implementations as examples. For a detailed implementation procedure, refer to an existing PDU session establishment procedure. Details are not described herein again.

The identifier information of the first session may be a PDU session ID.

Step 802: The SMF learns that load information of the first network slice instance reaches or exceeds the threshold.

In an implementation, in a specific manner of learning that the load information of the first network slice instance reaches or exceeds the threshold, the SMF may subscribe to the load information of the first network slice instance from a communication apparatus, or subscribe to information indicating that the load information of the first network slice instance reaches or exceeds the threshold, to learn of a load status of the first network slice instance in a timely manner.

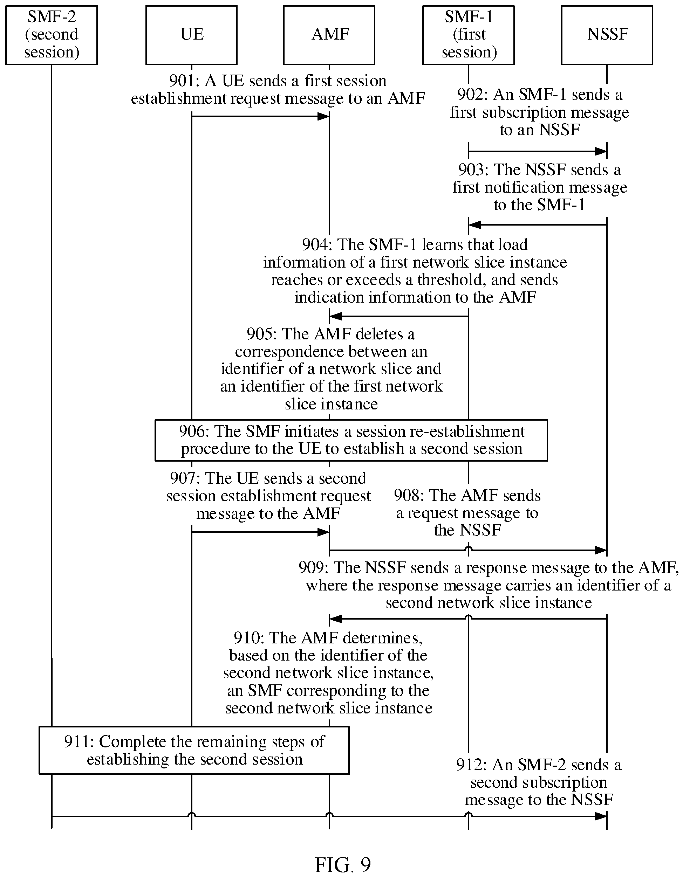

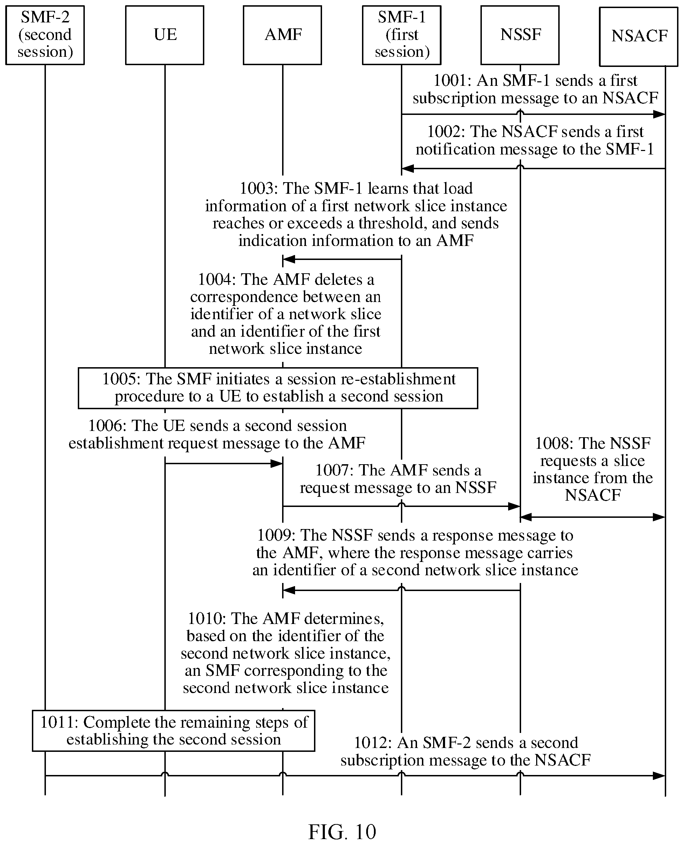

Specifically, the SMF may be used as a subscription network element, and request, from the communication apparatus (a network element, such as an NSSF, an NSACF, or an NWDAF), subscription to load information of a specified network slice instance. Therefore, when determining that load information of a network slice instance requested by the subscription network element reaches or exceeds the threshold, the communication apparatus may send a subscription notification to the subscription network element, to trigger a change of the network slice instance. This will be further described with reference to FIG. 9 or FIG. 10 below.

When determining that the load information of the first network slice instance reaches or exceeds the threshold, the SMF executes step 803.

Step 803: The SMF sends indication information to the AMF, and triggers establishment of a second session.

In a possible implementation, the indication information may be used to indicate the AMF to delete the correspondence between an identifier of the network slice and the identifier of the first network slice instance.

Further, the SMF may also send the identifier information corresponding to the first session to the AMF, to indicate the AMF to determine, based on the identifier information, a session of the user equipment, where a correspondence between an identifier of a network slice and an identifier of a network slice instance in a context of the session needs to be deleted.

In another possible implementation, the indication information may indicate, to the AMF, that the load information of the first network slice instance reaches or exceeds the threshold.

In addition, after learning that the load information of the first network slice instance reaches or exceeds the threshold, the SMF may trigger the UE to request to establish a new session. The first session and the new session are associated with a same network slice. For a detailed session re-establishment process, refer to an existing PDU session re-establishment procedure or related descriptions in the following implementation shown in FIG. 8 in this application. Details are not described herein again.

Step 804: The AMF deletes the correspondence between the identifier of the network slice and the identifier of the first network slice instance.

For example, when the indication information is used to indicate the AMF to delete the correspondence between the identifier of the network slice and the identifier of the first network slice instance, after receiving the indication information, the AMF may delete the correspondence between the identifier of the network slice and the identifier of the first network slice instance. When the indication information indicates, to the AMF, that the load information of the first network slice instance reaches or exceeds the threshold, after receiving the indication information, the AMF determines, based on the indication information, that the correspondence between the identifier of the network slice and the identifier of the first network slice instance needs to be deleted, and then deletes the correspondence between the identifier of the network slice and the identifier of the first network slice instance.

For example, it can be learned from the foregoing descriptions that the AMF may store, in the context of the AMF, the correspondence between the allowed network slice and the first network slice instance, for example, the correspondence between the S-NSSAI-1 and the NSI-ID-1. After receiving the indication information from the SMF, the AMF may determine, based on an identifier of the first session and a correspondence between an identifier of a session and an identifier of a network slice instance in the indication information, that the first session is served by the first network slice instance, and the AMF deletes the previously stored correspondence between the identifier of the network slice and the identifier of the first network slice instance.

Step 805: In a procedure for establishing the second session, the AMF determines a second network slice instance for the second session.

The second session may be served by the second network slice instance, and the first network slice instance and the second network slice instance correspond to the same network slice.

In the foregoing implementation, an SMF obtains a load status of a network slice instance. When determining that a load of an allocated network slice instance reaches or exceeds a threshold, the SMF may send indication information to an AMF and trigger a UE to re-establish a session, to migrate a current session of the user equipment to a new network slice instance. This avoids resource shortage or communication congestion on a network slice instance.

In a specific manner in which the SMF learns that load information of a first network slice instance reaches or exceeds the threshold, the SMF may be used as a subscription network element to request, from a communication apparatus, subscription to load information of a specified network slice instance. By using such a subscription mechanism, when determining that load information of a network slice instance that is requested by the subscription network element reaches or exceeds the threshold, the communication apparatus may send a subscription notification to the subscription network element, to trigger a change of the network slice instance. For example, in the following FIG. 9, that the communication apparatus is an NSSF is merely used as an example, and an example in which the communication apparatus is an NSACF is used for descriptions in FIG. 10.

For example, FIG. 9 is a diagram of a communication method according to an embodiment of this application. The method may include the following steps.

Step 901: A UE sends a first session establishment request message to an AMF.

The first session establishment request message carries information such as an identifier of a first session, an identifier of a network slice, for example, S-NSSAI, and a data network name (data network name, DNN).

In an implementation, before step 901, a registration procedure of the UE may be further included. For a specific process, refer to related descriptions in the foregoing embodiment. Details are not described herein again.

Correspondingly, the AMF receives the first session establishment request message from the UE, determines, based on the S-NSSAI-1 in the first session establishment request message and by querying a context of the UE, a first network slice instance (for example, a network slice instance 1) and an NRF ID (an NRF network element 1) corresponding to the S-NSSAI-1, and requests the NRF to discover that an SMF corresponding to the first network slice instance is an SMF-1, to obtain an SMF ID. Then, the AMF sends an identifier of the first network slice instance to the SMF based on the SMF ID. Subsequently, the AMF may maintain a correspondence between the identifier (for example, a PDU session ID) of the first session, the S-NSSAI, an NSI ID, and the SMF ID. For other steps of establishing a PDU session, refer to an existing PDU session establishment procedure. Details are not described herein again.

According to the foregoing steps, the AMF determines that the first session is served by the first network slice instance, and the AMF sends the first network slice instance to the SMF based on the SMF ID. In this case, the SMF-1 corresponding to the first session may request, from the NSSF, subscription to load information of the first network slice instance, and step 902 is executed.

Step 902: The SMF-1 sends a first subscription message to an NSSF.

Optionally, the first subscription message is used to request to subscribe to the load information of the first network slice instance, and the first subscription message includes the identifier of the first network slice instance.

Alternatively, optionally, the first subscription message is used to request to send a notification to the SMF-1 when the load information of the first network slice instance reaches or exceeds a threshold.

In addition, in a possible implementation, the first subscription message may further include the threshold corresponding to the first network slice instance. For specific content, refer to related descriptions in the foregoing step 601. Details are not described herein again.

It should be noted that the SMF may send the first subscription message to the communication apparatus in a session establishment procedure or after the session establishment procedure is completed. For example, in FIG. 9, only an example in which the SMF requests subscription from the communication apparatus in the session establishment procedure is used. This is not specifically limited in this embodiment of this application.

In a procedure for establishing the first session or after establishment of the first session is completed, a load of the first network slice instance reaches or exceeds the threshold, and the communication apparatus executes the following step 903 based on previous subscription of the SMF.

Step 903: The NSSF sends a first notification message to the SMF-1.

Optionally, if the first subscription message is used to request to subscribe to load information of the first network slice instance, the first notification message indicates the load information of the first network slice instance. The first notification message may include current load information of the first network slice instance. Specifically, the communication apparatus may determine, based on an identifier of a network slice instance that is requested to be subscribed to in the first subscription message, load information corresponding to the network slice instance that is requested to be subscribed to.

In a possible implementation, the communication apparatus may periodically carry the load information corresponding to the first network slice instance in the first notification message, and send the first notification message to the SMF-1. It may be understood that the communication apparatus notifies, based on a subscription request, the SMF-1 of the load information corresponding to the network slice instance. The communication apparatus may not determine whether the load information corresponding to the network slice instance is greater than or equal to the preset threshold, but may directly send the current load information of the network slice instance to the SMF-1, and the SMF-1 determines, based on the current load information of the network slice instance, whether the threshold is reached.

In another possible implementation, the communication apparatus sends the current load information of the network slice instance to the SMF-1 only when determining that the load information corresponding to the network slice instance is greater than or equal to the preset threshold. In this case, the current load information of the first network slice instance is greater than or equal to the preset threshold. In other words, when determining that the load information of the first network slice instance reaches or exceeds the threshold, the NSSF may send the first notification message to the SMF-1, where the first notification message carries the current load information of the first network slice instance, to implicitly indicate to the SMF-1 that the load information of the first network slice instance reaches or exceeds the threshold. It may be understood that the communication apparatus first determines, based on the subscription request, whether the load information corresponding to the network slice instance is greater than or equal to the preset threshold. When the load information corresponding to the network slice instance is greater than or equal to the preset threshold, the communication apparatus sends the load information of the network slice instance to the SMF-1. In this case, the SMF-1 may obtain a specific status of the current load information.

Optionally, if the first subscription message is used to request to send a notification to the SMF-1 when the load information of the first network slice instance reaches or exceeds the threshold, the first notification message is used to notify that the load information of the first network slice instance reaches or exceeds the threshold. In other words, when determining that the load information of the first network slice instance reaches or exceeds the threshold, the NSSF may send the first notification message to the SMF-1, where the first notification message carries a specific indication bit, to explicitly indicate to the SMF-1 that the load information of the first network slice instance reaches or exceeds the threshold. It may be understood that the NSSF first determines, based on the subscription request, whether the load information corresponding to the first network slice instance is greater than or equal to the preset threshold. When the load information corresponding to the first network slice instance is greater than or equal to the preset threshold, the communication apparatus sends indication information to the SMF-1. The indication information indicates that the load information of the first network slice instance reaches or exceeds the threshold. In this case, the SMF-1 may not need to sense the current load information.

In this case, an indicated event that the load of the network slice instance reaches or exceeds the threshold may be defined in advance. After receiving subscription to the event, the communication apparatus may send a notification message when determining that the event occurs.

Optionally, the first notification message may further include an identifier of at least one network slice instance. For specific content, refer to related descriptions in the foregoing step 604. Details are not described herein again.

Step 904: The SMF-1 learns that the load information of the first network slice instance reaches or exceeds the threshold, and sends indication information to the AMF.

Based on the foregoing subscription procedure, the SMF-1 may learn, based on the first notification message, that the load information of the first network slice instance reaches or exceeds the threshold, and send the indication information to the AMF.

The indication information may indicate that the load information of the first network slice instance reaches or exceeds the threshold, or may indicate the AMF to delete a correspondence between an identifier of a network slice and the identifier of the first network slice instance.

Step 905: The AMF deletes the correspondence between the identifier of the network slice and the identifier of the first network slice instance.

The AMF deletes, based on the indication information of the SMF-1, the correspondence between the identifier of the network slice and the identifier of the first network slice instance. Refer to related descriptions in the foregoing step 804.

Step 906: The SMF initiates a session re-establishment procedure to the UE to establish a second session.

Refer to the session re-establishment procedure in the foregoing implementations. The SMF may send a session release request message to the UE, or the SMF may send a session modification request message to the UE. For details, refer to the foregoing steps 608-1 and 608-2.

In an implementation, the AMF may determine a second network slice instance for the second session by using the following steps. For example, the following steps may be included.

Step 907: The UE sends a second session establishment request message to the AMF.

Correspondingly, the AMF receives the second session establishment request message from the UE, where the second session establishment request message includes the identifier of the network slice, an identifier of the second session, the DNN, and the like.

In an implementation, because the AMF deletes the correspondence between the identifier of the network slice and the identifier of the first network slice instance in the foregoing step 905, the AMF may request the NSSF to allocate a new network slice instance to the second session of the UE. The method may further include the following steps.

Step 908: The AMF sends a request message to the NSSF.

Step 909: The NSSF sends a response message to the AMF, where the response message carries an identifier of the second network slice instance.

For example, the request message may be a slice selection request message, and the request message includes an identifier of a network slice. The response message may be a slice selection response message.

For example, a network slice instance 1 and a network slice instance 2 are deployed based on the S-NSSAI-1 in a core network. In a registration process on the UE side, a network slice instance that may be selected by the NSSF for the S-NSSAI-1 requested by the UE is the network slice instance 1. However, the current network slice instance 1 is overloaded, and a network slice instance that is reselected by the NSSF for the S-NSSAI-1 is the network slice instance 2. In addition, the response message sent by the NSSF to the AMF may further carry an identifier of an NRF network element corresponding to the second network slice instance, to subsequently discover another network element in the second network slice instance.

Step 910: The AMF determines, based on the identifier of the second network slice instance, an SMF corresponding to the second network slice instance.

The AMF determines, according to step 909, the second network slice instance and an NRF ID that correspond to S-NSSAI associated with the second session, and requests the NRF to discover the SMF network element corresponding to the second network slice instance. For example, the AMF determines the SMF corresponding to the second network slice instance. For a specific process, refer to an existing interaction procedure. Details are not described herein again in this application. After the second session is successfully established, the AMF maintains a correspondence between the identifier (for example, a PDU session ID) of the second session, the S-NSSAI, the identifier of the second network slice instance, that is, an NSI-ID-2, and an SMF ID corresponding to the second session.

Step 911: Complete the remaining steps of establishing the second session.

The AMF interacts with an SMF-2 corresponding to the second network slice instance and the UE, to complete establishment of the second session based on the second network slice instance. For a detailed implementation procedure, refer to an existing PDU session establishment procedure. Details are not described herein again.

For the foregoing steps 908 to 911, refer to related descriptions of the foregoing steps 610 to 613. Details are not described herein again.

By using the foregoing implementation, an SMF may obtain, in a timely manner through subscription, load information of a network slice instance that serves a current session. Therefore, when the load information of the network slice instance reaches or exceeds a preset threshold, the SMF triggers establishment of a new session, and indicates an AMF to delete a previously stored correspondence between a network slice and a network slice instance, and to request to allocate a new network slice instance to the new session. This avoids a problem of resource shortage or communication congestion caused by subsequent continuous use of a same network slice instance. By using the foregoing implementation of this application, another network slice instance with plenty of resources deployed in the network can be flexibly used, thereby improving utilization of network slice resources.

Based on the mechanism that an SMF-1 corresponding to a first session may subscribe to a load status of a network slice instance provided in this application, an SMF-2 corresponding to a second session may also subscribe to a load status of a second network slice instance from an NSSF. This avoids a problem of subsequent resource shortage or communication congestion on a network slice. Specifically, the following step may be included.

Step 912: The SMF-2 sends a second subscription message to the NSSF.

It should be noted that, it can be learned from the foregoing content that a network element that requests subscription from the communication apparatus may be referred to as a subscription network element. In the embodiment shown in FIG. 8, an SMF corresponding to an established PDU session serves as a subscription network element to subscribe to a load status of a network slice instance. Therefore, subscription requests of different network slice instances are usually initiated by different subscription network elements. For example, in the embodiment shown in FIG. 9, the first subscription network element that sends the first subscription message is the SMF-1, and the second subscription network element that sends the second subscription message is the SMF-2.

In an implementation, as shown in FIG. 10, an SMF may be used as a subscription network element to request, from an NSACF, subscription to load information of a specified network slice instance, or request, from the NSACF, subscription to information indicating that load information of the specified network slice instance reaches or exceeds a threshold. Therefore, when the NSACF determines that the load information of the network slice instance requested by the subscription network element reaches or exceeds the threshold, the NSACF may send a subscription notification to the subscription network element SMF, to trigger a change of the network slice instance.

As shown in FIG. 10, the method may include the following steps.

Step 1001: An SMF-1 sends a first subscription message to the NSACF.

A method for sending, by the SMF-1, the first subscription message to the NSACF may be as follows: The SMF-1 may directly send the first subscription message to the NSACF, or the SMF-1 may first send the first subscription message to an NSSF, and then the NSSF transfers the first subscription message to the NSACF. A method for sending, by the SMF-1, the first subscription message to the NSACF is not limited in this embodiment of this application.

For a registration procedure of a UE before step 1001, refer to corresponding descriptions of steps 701 to 704 in the foregoing embodiment.

Step 1002: The NSACF sends a first notification message to the SMF-1.

For descriptions of the first subscription message and the first notification message, refer to related descriptions in the embodiment shown in FIG. 6A and FIG. 6B. Details are not described herein again.

Correspondingly, a method for sending, by the NSACF, the first notification message to the SMF-1 may be as follows: The NSACF directly sends the first notification message to the SMF-1, or the NSACF first sends the first notification message to the NSSF, and then the NSSF forwards the first notification message to the SMF-1.

The SMF may send the first subscription message to the communication apparatus in a session establishment procedure or after the session establishment procedure is completed. For example, in FIG. 10, only an example in which the SMF requests subscription from the communication apparatus in the session establishment procedure is used. This is not specifically limited in this embodiment of this application.

In a procedure for establishing a first session or after establishment of the first session is completed, a load of a first network slice instance reaches or exceeds the threshold, and the communication apparatus executes the following step 1003 based on previous subscription of the SMF.

Step 1003: The SMF-1 learns that load information of the first network slice instance reaches or exceeds the threshold, and sends indication information to an AMF.

Step 1004: The AMF deletes a correspondence between an identifier of a network slice and an identifier of the first network slice instance.

In step 1003, after learning that the load information of the first network slice instance reaches or exceeds the threshold, the AMF may delete the correspondence between the identifier of the network slice and the identifier of the first network slice instance.

Step 1005: The SMF initiates a session re-establishment procedure to the UE to establish a second session.

Step 1006: The UE sends a second session establishment request message to the AMF.

Step 1007: The AMF sends a request message to the NSSF.

Step 1008: The NSSF requests a slice instance from the NSACF.

The NSACF stores and maintains load information of a network slice instance in a network slice. Therefore, the NSSF needs to request the NSACF to re-allocate a network slice instance to the network slice. For example, a network slice instance 1 and a network slice instance 2 are deployed based on S-NSSAI-1 in a core network. In the foregoing procedure, a network slice instance that may be selected by the NSACF for the S-NSSAI-1 is the network slice instance 1. Because the network slice instance 1 is overloaded, the NSACF may allocate the network slice instance 2 to the network slice S-NSSAI-1. A response sent by the NSACF to the NSSF carries an identifier of a second network slice instance.

Step 1009: The NSSF sends a response message to the AMF, where the response message carries the identifier of the second network slice instance.

Then, the NSSF may send the response message to the AMF based on the identifier of the second network slice instance that is carried in the NSACF response obtained in step 1008, where the response message carries the identifier of the second network slice instance.

Step 1010: The AMF determines, based on the identifier of the second network slice instance, an SMF corresponding to the second network slice instance.

Step 1011: Complete the remaining steps of establishing the second session.

Subsequently, the AMF determines, based on the identifier of the second network slice instance, an SMF-2 corresponding to the second network slice instance, and completes establishment of the second session.

By using the foregoing implementation, an SMF may subscribe to an NSACF, and obtain load information of a network slice instance that serves a current session in a timely manner. Therefore, when the load information of the network slice instance reaches or exceeds a preset threshold, the SMF triggers establishment of a new session, and indicates an AMF to delete a previously stored correspondence between a network slice and a network slice instance, and to request to allocate a new network slice instance to the new session. This avoids a problem of resource shortage or communication congestion caused by subsequent continuous use of a same network slice instance. By using the foregoing implementation of this application, another network slice instance with plenty of resources deployed in the network can be flexibly used, thereby improving utilization of network slice resources.

The NSACF stores and maintains the load information of the network slice instance in the network slice. Therefore, the SMF-2 corresponding to the second session may further subscribe to load information of the second network slice instance from the NSACF.

Step 1012: The SMF-2 sends a second subscription message to the NSACF.

The second subscription message may include the identifier of the second network slice instance, and the second subscription message is used to request to subscribe to the load information of the second network slice instance, or is used to request to send a notification to the SMF-2 when the load information of the second network slice instance reaches or exceeds the threshold. For example, the second network slice instance is the network slice instance 2. The NSACF may send the second notification message to the SMF-2 when load information of the network slice instance 2 reaches or exceeds the threshold, to further re-allocate a network slice instance. This avoids a problem of resource shortage or communication congestion.

A method for sending, by the SMF-2, the second subscription message to the NSACF may be as follows: The SMF-2 may directly send the second subscription message to the NSACF, or the SMF-2 may first send the first subscription message to the NSSF, and then the NSSF transfers the second subscription message to the NSACF. A method for sending, by the SMF-2, the second subscription message to the NSACF is not limited in this embodiment of this application.

Optionally, the communication apparatus NSACF in the embodiment shown in FIG. 10 may be alternatively replaced with an NWDAF network element, which may also be configured to implement the method for determining a network slice instance in the foregoing embodiment. For a specific process, refer to the foregoing content. Details are not described again in this application.

With reference to the descriptions in FIG. 5 to FIG. 10, it may be understood that, regardless of whether an AMF is used as a subscription network element or an SMF subscription network element, a communication apparatus for receiving a subscription may be an NSSF, an NSACF, or an NWDAF.

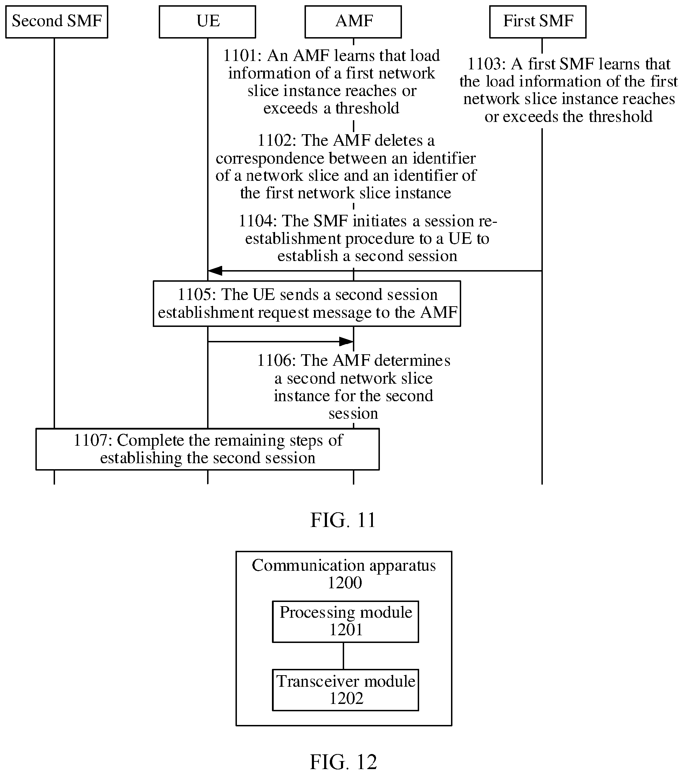

In addition, FIG. 11 provides another communication method for switching a network slice instance. When learning, by using a subscription mechanism, that a load of a first network slice instance corresponding to a current first session reaches or exceeds a threshold, an AMF may delete an association relationship between a network slice and the first network slice instance. Therefore, when learning that load information of the first network slice instance reaches or exceeds the threshold, an SMF serving the first network slice instance may trigger a new second session. The AMF may select a new network slice instance for the second session, that is, a second network slice instance. This can effectively avoid a problem of resource shortage or communication congestion caused by selecting a network slice instance based on a fixed correspondence between a network slice and a network slice instance.

It may be understood that a difference between the method shown in FIG. 11 and the method shown in FIG. 5 lies in that, when the AMF learns, through subscription, that a slice instance is overloaded, the AMF does not need to send indication information to the SMF. The SMF may learn, through self-detection, that the slice instance is overloaded, and trigger session re-establishment.

As shown in FIG. 11, the method may include the following steps.

Step 1101: The AMF learns that the load information of the first network slice instance reaches or exceeds the threshold.

A network allocates, to the first session, the first network slice instance to provide a service. For a process of establishing the first session and a process of allocating a network slice instance, refer to related descriptions in the foregoing embodiment.

The AMF may be used as a subscription network element to request subscription to load information of a specified network slice instance from another communication apparatus. Therefore, when determining that the load information of the network slice instance requested by the AMF reaches or exceeds the threshold, the communication apparatus may send a subscription notification to the AMF, to trigger a change of the network slice instance.

For example, the AMF may request to subscribe to the load information of the first network slice instance from another network element, such as an NSSF, an NSACF, or an NWDAF, or subscribe to information indicating that the load information of the first network slice instance reaches or exceeds the threshold, to learn of a load status of the first network slice instance in a timely manner. Specifically, for a specific process of subscribing to the load information, refer to related descriptions in the foregoing embodiment. Details are not described herein again.

When determining that the load information of the first network slice instance reaches or exceeds the threshold, the AMF executes step 1102.

Step 1102: The AMF deletes a correspondence between an identifier of a network slice and an identifier of the first network slice instance.

After an NSSF selects a corresponding network slice instance for each piece of S-NSSAI in allowed NSSAI, for example, the AMF stores the correspondence between the identifier of the network slice and the identifier of the first network slice instance in a context of a UE. However, when the AMF learns that the load information of the first network slice instance corresponding to the first session has reached or exceeded the threshold, the AMF may delete the previously stored correspondence between the identifier of the network slice and the identifier of the first network slice instance.

Step 1103: A first SMF learns that the load information of the first network slice instance reaches or exceeds the threshold.

For example, because the first SMF serves the first network slice instance, the first SMF may learn, through operation, maintenance, and management (Operation Administration and Maintenance, OAM) or through self-detection, whether the load information of the first network slice instance reaches or exceeds the threshold. For example, if the first SMF determines, based on a quantity of sessions that have been established on the first network slice instance, that the threshold has been reached or exceeded, the first SMF detects that the load information of the first network slice instance reaches or exceeds the threshold.

When determining that the load information of the first network slice instance reaches or exceeds the threshold, the first SMF executes step 1104.

In another implementation, that the first SMF learns that the load information of the first network slice instance reaches or exceeds the threshold may be further determined by using indication information sent by the AMF to the first SMF. For details, refer to related descriptions in the foregoing embodiments, for example, FIG. 5 or FIG. 6A and FIG. 6B.

It should be noted that there is no sequence between step 1103 and step 1101 and/or step 1102. For example, step 1103 and step 1101 may be executed simultaneously, or step 1103 and step 1102 may be executed simultaneously.

Step 1104: The first SMF initiates a session re-establishment procedure to the UE to establish a second session.

The first SMF triggers the UE to establish a new session. For example, refer to related descriptions of step 608-1 or step 608-2 in the foregoing embodiment. For a detailed process, refer to an existing PDU session re-establishment procedure.

Step 1105: The UE sends a second session establishment request message to the AMF.

The second session establishment request message includes an identifier of a network slice, and the identifier of the network slice is the same as the identifier of the network slice carried in the first session establishment request message.

Step 1106: The AMF determines the second network slice instance for the second session.

Correspondingly, the AMF receives the second session establishment request message from the UE, and determines the corresponding second session establishment request message for the second session based on the second session establishment request message.

The second session may be served by the second network slice instance, and the first network slice instance and the second network slice instance correspond to a same network slice.

Step 1107: Complete the remaining steps of establishing the second session.

Specifically, the AMF may determine, based on an identifier of the second network slice instance, a second SMF corresponding to the second network slice instance, and the AMF interacts with the second SMF and the UE to complete establishment of the second session based on the second network slice instance. For a detailed implementation procedure, refer to an existing PDU session establishment procedure. Details are not described herein again.

By using the foregoing implementation, an AMF may obtain, in a timely manner through subscription, load information of a network slice instance serving a current session, and an SMF may also obtain, through detection, the load information of the network slice instance serving the current session. Therefore, when determining that the load information of the network slice instance reaches or exceeds a preset threshold, the SMF triggers establishment of a new session, and the AMF deletes a previously stored correspondence between a network slice and a network slice instance, and requests to allocate a new network slice instance for the new session. This avoids a problem of resource shortage or communication congestion caused by subsequent continuous use of a same network slice instance. By using the foregoing implementation of this application, another network slice instance with plenty of resources deployed in the network can be flexibly used, thereby improving utilization of network slice resources.

The foregoing mainly describes the solutions provided in embodiments of this application from a perspective of interaction between network elements. It may be understood that, to implement the foregoing functions, the foregoing network elements or communication apparatuses include corresponding hardware structures and/or software modules for executing the functions. A person skilled in the art should be easily aware that, in combination with units and algorithm operations of the examples described in embodiments disclosed in this specification, this application can be implemented by hardware or a combination of hardware and computer software. Whether a function is executed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, a network element may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

For example, when each functional module is divided in an integrated manner, this application provides a communication apparatus, configured to implement the steps executed by the access and mobility management function network element in FIG. 5 to FIG. 7B in the foregoing embodiments. As shown in FIG. 12, the apparatus 1200 includes a processing module 1201 and a transceiver module 1202. The transceiver module 1202 is configured to implement a transceiver function, for example, may be specifically a transceiver circuit, a transceiver set, a transceiver, or a communication interface.

The processing module 1201 may be configured to learn that load information of a first network slice instance reaches or exceeds a threshold, where the first network slice instance serves a first session.

The transceiver module 1202 may be configured to perform operations of sending or receiving data or information on an AMF side in the foregoing embodiments of this application, such as sending indication information to a session management function network element corresponding to the first session, for example, step 504. The indication information is used to trigger establishment of a second session.

The processing module 1201 is further configured to perform an operation other than receiving or sending data or information on an AMF side in the foregoing embodiments of this application, such as determining a second network slice instance for the second session.

Correspondingly, this application further provides a communication apparatus, configured to implement the steps executed by the session management function network element in FIG. 5 to FIG. 7B in the foregoing embodiments. As shown in FIG. 12, the apparatus 1200 includes a processing module 1201 and a transceiver module 1202.

The processing module 1201 is configured to establish a first session, where the first session is served by a first network slice instance.

The transceiver module 1202 is configured to perform operations of sending or receiving data or information on an SMF side in the foregoing embodiments of this application, such as receiving indication information from an access and mobility management function network element, for example, step 504. The indication information indicates that load information of the first network slice instance reaches or exceeds a threshold, or the indication information is used to trigger establishment of a second session.

The processing module 1201 is further configured to perform an operation other than receiving or sending data or information on an SMF side in the foregoing embodiments of this application, such as triggering, based on the indication information, the establishment of the second session. The second session is served by a second network slice instance, and the first network slice instance and the second network slice instance correspond to a same network slice.

This application further provides a communication apparatus, configured to implement the steps executed by the session management function network element in FIG. 8 to FIG. 10 in the foregoing embodiments. As shown in FIG. 12, the apparatus 1200 includes a processing module 1201 and a transceiver module 1202. The transceiver module 1202 is configured to implement a transceiver function, for example, may be specifically a transceiver circuit, a transceiver set, a transceiver, or a communication interface.

The processing module 1201 is configured to establish a first session, where the first session is served by a first network slice instance. The processing module 1201 is further configured to perform an operation other than receiving or sending data or information on an SMF-1 side in the foregoing embodiments of this application, such as learning that load information of the first network slice instance reaches or exceeds a threshold, for example, step 801 or step 802.

The transceiver module 1202 is configured to send indication information to an access and mobility management function network element, where the indication information indicates that load information of the first network slice instance reaches or exceeds the threshold, or indicates the access and mobility management function network element to delete a correspondence between an identifier of a network slice and an identifier of the first network slice instance.

The transceiver module 1202 is further configured to perform operations of sending or receiving data or information on an SMF-1 side in the foregoing embodiments of this application, such as initiating a session re-establishment procedure to a user equipment to establish a second session, for example, step 803. The second session is served by a second network slice instance, and the first network slice instance and the second network slice instance correspond to a same network slice.

Correspondingly, this application further provides a communication apparatus, configured to implement the steps executed by the access and mobility management function network element in FIG. 8 to FIG. 10 in the foregoing embodiments. As shown in FIG. 12, the apparatus 1200 includes a processing module 1201 and a transceiver module 1202.

The transceiver module 1202 is configured to receive indication information from a session management function network element, where a first network slice instance serves a first session service that has been established.

The processing module 1201 is configured to delete, based on the indication information, a correspondence between an identifier of a network slice and an identifier of the first network slice instance.

The transceiver module 1202 is further configured to perform operations of sending or receiving data or information on an AMF side in the foregoing embodiments of this application, such as receiving a second session establishment request message, for example, step 803. The second session establishment request message includes the identifier of the network slice.

The processing module 1201 is further configured to perform an operation other than receiving or sending data or information on an AMF side in the foregoing embodiments of this application, such as determining a second network slice instance for a second session, for example, step 801, step 804, or step 805. The second session is served by the second network slice instance, and the first network slice instance and the second network slice instance correspond to a same network slice.

In addition, this application further provides a communication apparatus, configured to implement the steps executed by the access and mobility management function network element in FIG. 11 in the foregoing embodiment. As shown in FIG. 12, the apparatus 1200 includes a processing module 1201 and a transceiver module 1202.

The processing module 1201 may be configured to learn that load information of a first network slice instance reaches or exceeds a threshold, where the first network slice instance serves a first session.

The processing module 1201 may be further configured to delete a correspondence between an identifier of a network slice associated with the first session and an identifier of the first network slice instance.

The transceiver module 1202 is configured to: receive an establishment request message corresponding to a second session, and determine a second network slice instance for the second session, where the first network slice instance and the second network slice instance correspond to a same network slice.

Correspondingly, this application further provides a communication apparatus, configured to implement the steps executed by the session management function network element in FIG. 12 in the foregoing embodiment. As shown in FIG. 12, the apparatus 1200 includes a processing module 1201 and a transceiver module 1202.

The processing module 1201 and the transceiver module 1202 may be configured to establish a first session, where the first session is served by a first network slice instance.

When the processing module 1201 determines that load information of the first network slice instance reaches or exceeds a threshold, the processing module 1201 and the transceiver module 1202 may be configured to trigger establishment of a second session, where the second session is served by a second network slice instance, and the first network slice instance and the second network slice instance correspond to a same network slice.

In a simple embodiment, a person skilled in the art may figure out that the foregoing communication apparatus 1200 may be in a form shown in FIG. 4. For example, the processor 401 in FIG. 4 may invoke computer-executable instructions stored in the memory 403, so that the communication apparatus 1200 executes the methods executed by each network element or communication apparatus in the foregoing method embodiments.

For example, a function or an implementation process of the transceiver module 1202 in FIG. 12 may be implemented by the processor 401 in FIG. 4 by invoking the computer-executable instructions stored in the memory 403. Alternatively, a function or an implementation process of the processing module 1201 in FIG. 12 may be implemented by the processor 401 in FIG. 4 by invoking the computer-executable instructions stored in the memory 403, and a function or an implementation process of the transceiver module 1202 in FIG. 12 may be implemented by the communication interface 404 in FIG. 4.

It should be noted that one or more of the foregoing modules or units may be implemented by using software, hardware, or a combination thereof. When any one of the foregoing modules or units is implemented by software, the software exists in a form of computer program instructions, and is stored in the memory. The processor may be configured to execute the program instructions and implement the foregoing method procedure. The processor may be built into a SoC (system on chip) or an ASIC, or may be an independent semiconductor chip. In addition to the core configured to perform calculation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to execute the foregoing method procedures.

Optionally, an embodiment of this application further provides a chip system, including: at least one processor and an interface, where the at least one processor is coupled to a memory by using an interface, and when the at least one processor executes a computer program or instructions in the memory, the method in any one of the foregoing method embodiments is executed. In a possible implementation, the chip system further includes the memory. Optionally, the chip system may include a chip, or may include a chip and another discrete component. This is not specifically limited in this embodiment of this application.

Optionally, an embodiment of this application further provides a computer-readable storage medium. All or some of the procedures in the foregoing method embodiments may be implemented by a computer program instructing related hardware. The program may be stored in the computer-readable storage medium. When the program is executed, the procedures of the foregoing method embodiments may be included. The computer-readable storage medium may be an internal storage unit of the communication apparatus in any one of the foregoing embodiments, for example, a hard disk drive or a memory of the communication apparatus. Alternatively, the foregoing computer-readable storage medium may be an external storage device of the communication apparatus, for example, a plug-in hard disk drive, a smart media card (smart media card, SMC), a secure digital (secure digital, SD) card, or a flash card (flash card) that is configured on the communication apparatus. Further, the foregoing computer-readable storage medium may include both an internal storage unit and an external storage device of the communication apparatus. The foregoing computer-readable storage medium is configured to store the foregoing computer program and store other programs and data that are required by the communication apparatus. The foregoing computer-readable storage medium may be further configured to temporarily store data that has been output or is to be output.

Optionally, an embodiment of this application further provides a computer program product. All or some of the procedures in the foregoing method embodiments may be implemented by a computer program instructing related hardware. The program may be stored in the computer program product. When the program is executed, the procedures of the foregoing method embodiments may be included.

Optionally, an embodiment of this application further provides computer instructions. All or some of the procedures in the foregoing method embodiments may be implemented by computer instructions instructing related hardware (such as a computer, a processor, an access network device, a mobility management network element, or a session management network element). The program may be stored in the computer-readable storage medium or the computer program product.

The foregoing descriptions about implementations allow a person skilled in the art to understand that, for the purpose of convenient and brief descriptions, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division during actual implementation. For example, a plurality of units or components may be combined or integrated into another apparatus, or some features may be ignored or not executed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, applied to an access and mobility management function network element, wherein the method comprises:
learning that load information of a first network slice instance reaches or exceeds a threshold, wherein the first network slice instance serves a first session;
sending indication information to a session management function network element corresponding to the first session, wherein the indication information is used to trigger establishment of a second session; and
determining a second network slice instance for the second session, wherein the first network slice instance and the second network slice instance correspond to a same network slice.

2. The method according to claim 1, wherein the indication information indicates that the load information of the first network slice instance reaches or exceeds the threshold.

3. The method according to claim 1 or 2, wherein the method further comprises:
deleting a correspondence between an identifier of the network slice and an identifier of the first network slice instance.

4. The method according to any one of claims 1 to 3, wherein the determining a second network slice instance for the second session specifically comprises:
receiving a second session establishment request message from a user equipment, wherein the second session establishment request message comprises the identifier of the network slice;
sending a request message to a network slice selection function network element, wherein the request message comprises the identifier of the network slice; and
receiving a response message from the network slice selection function network element, wherein the response message comprises an identifier of the second network slice instance.

5. The method according to any one of claims 1 to 4, wherein the learning that load information of a first network slice instance reaches or exceeds a threshold comprises:
sending a first subscription message to a communication apparatus, wherein the communication apparatus stores the load information of the first network slice instance in the network slice, and the first subscription message comprises the identifier of the first network slice instance;
receiving a first notification message from the communication apparatus; and
determining, based on the first notification message, that the load information of the first network slice instance reaches or exceeds the threshold.

6. The method according to claim 5, wherein the first subscription message is used to request to subscribe to the load information of the first network slice instance, and the first notification message indicates the load information of the first network slice instance; or
the first subscription message is used to request to send a notification to the access and mobility management function network element when the load information of the first network slice instance reaches or exceeds the threshold, and the first notification message is used to notify that the load information of the first network slice instance reaches or exceeds the threshold.

7. The method according to claim 5 or 6, wherein the first subscription message further comprises the threshold corresponding to the first network slice instance.

8. The method according to any one of claims 5 to 7, wherein the communication apparatus is a network slice selection function network element or a network slice admission control function network element.

9. A communication method, applied to a session management function network element, wherein the method comprises:
establishing a first session, wherein the first session is served by a first network slice instance;
receiving indication information from an access and mobility management function network element, wherein the indication information indicates that load information of the first network slice instance reaches or exceeds a threshold, or the indication information is used to trigger establishment of a second session; and
triggering the establishment of the second session based on the indication information, wherein the second session is served by a second network slice instance, and the first network slice instance and the second network slice instance correspond to a same network slice.

10. A communication method, applied to a session management function network element, wherein the method comprises:
establishing a first session, wherein the first session is served by a first network slice instance;
when learning that load information of the first network slice instance reaches or exceeds a threshold, sending indication information to an access and mobility management function network element, wherein the indication information indicates that the load information of the first network slice instance reaches or exceeds the threshold, or indicates the access and mobility management function network element to delete a correspondence between an identifier of a network slice and an identifier of the first network slice instance; and
initiating a session re-establishment procedure to a user equipment to establish a second session, wherein the second session is served by a second network slice instance, and the first network slice instance and the second network slice instance correspond to the same network slice.

11. The method according to claim 10, wherein the learning that load information of the first network slice instance reaches or exceeds a threshold comprises:
sending a first subscription message to a communication apparatus, wherein the communication apparatus stores the load information of the first network slice instance in the network slice, and the first subscription message comprises the identifier of the first network slice instance;
receiving a first notification message from the communication apparatus; and
determining, based on the first notification message, that the load information of the first network slice instance reaches or exceeds the threshold.

12. The method according to claim 11, wherein the first subscription message is used to request to subscribe to the load information of the first network slice instance, and the first notification message indicates the load information of the first network slice instance; or
the first subscription message is used to request to send a notification to the access and mobility management function network element when the load information of the first network slice instance reaches or exceeds the threshold, and the first notification message is used to notify that the load information of the first network slice instance reaches or exceeds the threshold.

13. The method according to claim 11 or 12, wherein the communication apparatus is a network slice selection function network element or a network slice admission control function network element.

14. A communication method, applied to an access and mobility management function network element, wherein the method comprises:
receiving indication information from a session management function network element, wherein a first network slice instance serves a first session that has been established;
deleting, based on the indication information, a correspondence between an identifier of a network slice and an identifier of the first network slice instance;
receiving a second session establishment request message, wherein the second session establishment request message comprises the identifier of the network slice; and
determining a second network slice instance for a second session, wherein the second session is served by the second network slice instance, and the first network slice instance and the second network slice instance correspond to the same network slice.

15. The method according to claim 14, wherein the indication information indicates that load information of the first network slice instance reaches or exceeds a threshold, or indicates the access and mobility management function network element to delete the correspondence between the identifier of the network slice and the identifier of the first network slice instance.

16. The method according to claim 14 or 15, wherein the determining a second network slice instance for a second session specifically comprises:
receiving a second session establishment request message from a user equipment, wherein the second session establishment request message comprises the identifier of the network slice;
sending a request message to a network slice selection function network element, wherein the request message comprises the identifier of the network slice; and
receiving a response message from the network slice selection function network element, wherein the response message comprises an identifier of the second network slice instance.

17. A communication method, applied to a communication apparatus, wherein the method comprises:
receiving a first subscription message from a first subscription network element, wherein the first subscription message comprises an identifier of a first network slice instance; and
if it is determined that load information of the first network slice instance reaches or exceeds a threshold, sending a first notification message to the first subscription network element, wherein
if the first subscription message is used to request to subscribe to the load information of the first network slice instance, the first notification message indicates the load information of the first network slice instance; or
if the first subscription message is used to request to send a notification to the first subscription network element when the load information of the first network slice instance reaches or exceeds the threshold, the first notification message indicates that the load information of the first network slice instance reaches or exceeds the threshold.

18. The method according to claim 17, wherein the communication apparatus stores the load information of the first network slice instance, and the communication apparatus is a network slice selection function network element or a network slice admission control function network element.

19. The method according to claim 17 or 18, wherein the first subscription network element is an access and mobility management function network element or a session management function network element.

20. The method according to any one of claims 17 to 19, wherein if the first subscription network element is an access and mobility management function network element and the communication apparatus is a network slice selection function network element, the method further comprises:
receiving a request message from the access and mobility management function network element, wherein the request message comprises an identifier of a network slice; and
sending a response message to the access and mobility management function network element, wherein the response message comprises an identifier of a second network slice instance, and the first network slice instance and the second network slice instance correspond to the same network slice.

21. A communication method, applied to an access and mobility management function network element, wherein the method comprises:
learning that load information of a first network slice instance reaches or exceeds a threshold, wherein the first network slice instance serves a first session;
deleting a correspondence between an identifier of a network slice associated with the first session and an identifier of the first network slice instance; and
receiving an establishment request message corresponding to a second session, and determining a second network slice instance for the second session, wherein the first network slice instance and the second network slice instance correspond to the same network slice.

22. The method according to claim 21, wherein the method further comprises:
sending indication information to a session management function network element corresponding to the first session, wherein the indication information is used to trigger establishment of the second session.

23. The method according to claim 22, wherein the indication information indicates that the load information of the first network slice instance reaches or exceeds the threshold.

24. The method according to any one of claims 21 to 23, wherein the learning that load information of a first network slice instance reaches or exceeds a threshold specifically comprises:
sending a first subscription message to a communication apparatus, wherein the communication apparatus stores the load information of the first network slice instance in the network slice, and the first subscription message comprises the identifier of the first network slice instance;
receiving a first notification message from the communication apparatus; and
determining, based on the first notification message, that the load information of the first network slice instance reaches or exceeds the threshold.

25. The method according to claim 24, wherein the first subscription message is used to request to subscribe to the load information of the first network slice instance, and the first notification message indicates the load information of the first network slice instance; or
the first subscription message is used to request to send a notification to the access and mobility management function network element when the load information of the first network slice instance reaches or exceeds the threshold, and the first notification message is used to notify that the load information of the first network slice instance reaches or exceeds the threshold.

26. A communication method, applied to a session management function network element, wherein the method comprises:
establishing a first session, wherein the first session is served by a first network slice instance; and
triggering establishment of a second session when load information of the first network slice instance reaches or exceeds a threshold, wherein the second session is served by a second network slice instance, and the first network slice instance and the second network slice instance correspond to a same network slice.

27. The method according to claim 26, wherein the method further comprises:
receiving indication information from an access and mobility management function network element, wherein the indication information is used to trigger the establishment of the second session.

28. The method according to claim 27, wherein the indication information indicates that the load information of the first network slice instance reaches or exceeds the threshold.

29. A communication apparatus, wherein the communication apparatus comprises a processor and a transmission interface, and
the processor is configured to execute instructions stored in a memory, so that the apparatus executes the method according to any one of claims 1 to 28.

30. A computer-readable storage medium, comprising a program or instructions, wherein when the program or the instructions are run by a processor, the method according to any one of claims 1 to 28 is executed.
